(19) Europäisches Patentamt / European Patent Office / Office européen des brevets

(11) **EP 4 723 052 A1**

(12) **EUROPEAN PATENT APPLICATION**

(43) Date of publication:
08.04.2026 Bulletin 2026/15

(21) Application number: 25179646.2

(22) Date of filing: 29.05.2025

(51) International Patent Classification (IPC):
*G06V 10/74* (2022.01)

(52) Cooperative Patent Classification (CPC):
G06V 10/74

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 01.10.2024 IL 31608724

(71) Applicant: FUJITSU LIMITED
Kawasaki-shi, Kanagawa 211-8588 (JP)

(72) Inventors:
• GILONI, Amit
  Slough, SL1 2BE (GB)

• HOFMAN, Omer
  Slough, SL1 2BE (GB)
• BROKMAN, Jonathan
  Slough, SL1 2BE (GB)
• VAINSHTEIN, Roman
  Slough, SL1 2BE (GB)
• SINGH, Inderjeet
  Slough, SL1 2BE (GB)
• RACHMIL, Oren
  Slough, SL1 2BE (GB)
• KOJIMA, Hisashi
  Slough, SL1 2BE (GB)

(74) Representative: Haseltine Lake Kempner LLP
Cheapside House
138 Cheapside
London EC2V 6BJ (GB)

(54) **GENERATED IMAGE DETECTION**

(57) A computer implemented method for detecting computer generated images comprising: loading an input image, inputting the input image and a representation describing the input image into a denoising model for denoising the input image using the representation, generating a denoised image embedding from the denoised image, generating an input image embedding from the input image, comparing a difference between the input image embedding and the denoised image embedding with a similarity decision threshold to determine whether the input image is a real image or a computer generated image.

300a

| S10 |
| Loading an input image |

| S20 |
| Inputting the input image and a representation describing the input image into a denoising model for denoising the input image using the representation |

| S30 |
| Generating a denoised image embedding from the denoised image |

| S40 |
| Generating an input image embedding from the input image |

| S50 |
| Comparing a difference between the input image embedding and the denoised image embedding with a similarity decision threshold to determine whether the input image is a real image or a computer generated image. |

Figure 3a

EP 4 723 052 A1

## Description

### Field of the Invention

The present invention relates to a method and apparatus for detecting computer generated images.

### Background

Generative AI (GenAI) technology has advanced greatly in the last few years. The current capabilities of GenAI technology are so advanced that an image generated by AI (artificial intelligence)/artificial neural networks (ANNs) can seem real to the human eye. As generative AI (GenAI) technology advances further yet, there is an increase in leveraging it to create fake content, specifically fake images. This can be leveraged for spreading fake content of a high quality. Thus, differentiating between real and fake images is a significant challenge. The Fake Image Detection Market size is projected to grow from USD 0.6 billion in 2024 to USD 3.9 billion by 2029 at a CAGR of 41.6%. according to a new report by MarketsandMarkets™ (https://www.prnewswire.com/news-releases/fake-image-detection-market-worth-3-9-billion-by-2029---exclusive-report-by-marketsandmarkets-302105477.html) [accessed 04 September 2024]).

AI-generated-image detectors are specifically designed to identify images which have been created or altered by artificial intelligence technologies, such as deepfakes or AI-generated artworks. The motivation for developing and using these detectors is multifaceted:

1. Integrity and Trust: As AI technologies become more sophisticated, distinguishing between real and AI-generated images becomes increasingly challenging. Detectors are needed to maintain the integrity of visual information, ensuring that what people see in media and online is trustworthy.

2. Security Concerns: AI-generated images may be used maliciously to create false information or impersonate individuals, potentially leading to security breaches, misinformation, or personal harm. Detectors help prevent such threats by identifying and flagging synthetic media.

3. Compliance with Regulations: With increasing regulations on digital content, businesses and content creators need to ensure compliance with laws regarding transparency in AI-generated content. Detectors can help in automatically identifying such content to label it accordingly or assess its legality.

It is therefore desirable to develop methods for detecting computer generated images. In particular, it is desirable to develop methods for detecting images generated using artificial neural networks.

### Summary of the invention

The present invention is defined in the independent claims, to which reference should now be made. Advantageous features are set out in the sub claims.

According to a first aspect there is provided a computer implemented method for detecting computer generated images comprising: loading an input image, inputting the input image and a representation describing the input image into a denoising model for denoising the input image using the representation, generating a denoised image embedding from the denoised image, generating an input image embedding from the input image, comparing a difference between the input image embedding and the denoised image embedding with a similarity decision threshold to determine whether the input image is a real image or a computer generated image.

### Brief description of drawings

Reference is made, by way of example only, to the accompanying drawings in which:

**Figure 1a** shows a known method for detecting computer generated images.

**Figure 1b** shows a comparison of the accuracy of various known methods for fake image detection;

**Figure 2** shows a fake content detection taxonomy;

**Figure 3a** shows steps of a method for detecting computer generated images;

**Figure 3b** shows a threshold setup and implementation of the method for detecting computer generated images

**Figure 4** shows a computer-generated content detection taxonomy;

**Figure 5** shows an example architecture for detecting computer generated images;

**Figure 6** shows an example of a known method for generating an image from noise using a diffusion model;

**Figure 7** shows a method for detecting fake images using a denoising model, developed by the inventors;

**Figure 8** shows an example pipeline for detecting computer-generated images;

**Figure 9** a simulation of toy data probability in a two-dimensional space;

**Figure 10** shows exemplary method choices and analysis for an implementation of the detection method described herein;

**Figure 11** shows a visual comparison between a denoised generated image and a denoised real image;

**Figure 12** shows a sample dependency evaluation comparing the method disclosed herein with known methods;

**Figure 13** shows a technique dependency experiment to evaluate the method disclosed herein;

**Figures 14a and 14b** show example use cases for the methods described herein;

**Figure 15** shows an autoencoder model which may be combined with the detector model described herein.

**Figure 16** shows a block diagram of an information processing apparatus or a computing device which may be used to implement the method described herein.

## Detailed description

Numerous techniques exist for creating fake visual content. Real images may be manipulated using "classic" manipulations such as retouching, editing, and/or altering; processed using applications such as Abode Photoshop and/or edited using model-based manipulations such inpainting and generative fill.

Fake visual content may also be generated from scratch, using for example GENAI models. Fake visual content generated from scratch may be referred to as computer generated content. Popular GENAI models for generating images are generative adversarial networks (GANs) and diffusion models. The ability to generate fake images has become more accessible with text-to-image models allowing users to simply describe a desired image in words.

Recent advancements in generative models, particularly diffusion-based techniques, yield realistic computer synthesized images that are increasingly difficult to distinguish from authentic images. This poses notable challenges in content verification, security, and anti-disinformation efforts, driving a demand for reliable mechanisms to detect AI-generated images. A wide array of contemporary research has focused on this task, where there is a consensus on the critical importance of generalization in this field.

Generative techniques evolve quickly, presenting substantial challenges in maintaining the generated datasets up-to-date. Thus, methods that rely on such datasets must effectively generalize well to new unseen generative techniques. Targeted efforts to enhance such generalization have been actively pursued. Notably, these methods still require data of thousands of diverse generated images, such as S.-Y. Wang, O. Wang, R. Zhang, A. Owens, and A. A. Efros. Cnn-generated images are surprisingly easy to spot... for now. In Proceedings of the IEEE/CVF conference on computer vision and pattern recognition, pages 8695-8704, and still rely on updated datasets. This underscores the need for adaptable detection methods, that do not depend on such datasets, like zero-shot approaches.

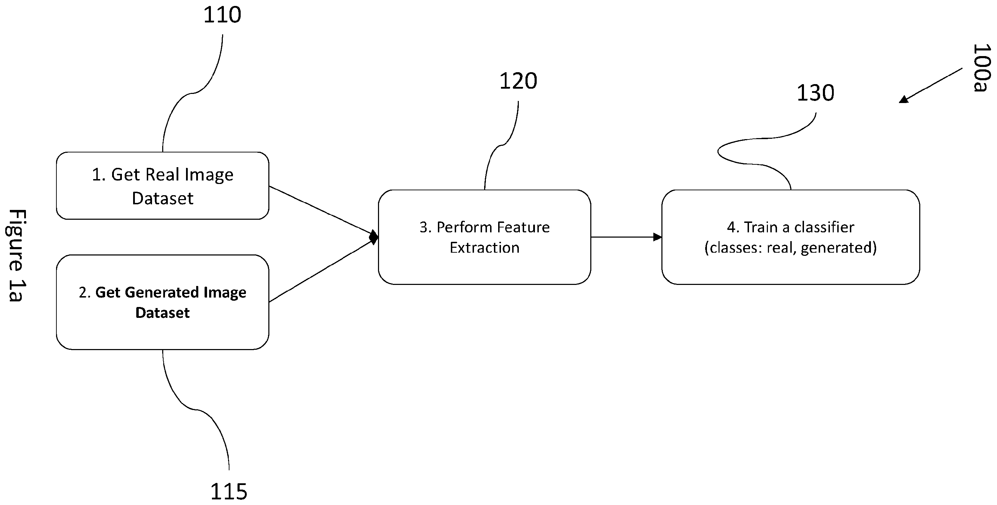

**Figure 1a** shows a known method 100a for detecting computer generated images. Technology for detecting fake images, to some degree, has existed for a relatively long time. For example, before the onset of GENAI, methods were used to detect real images which had been manipulated. There are therefore numerous effective known solutions available for detecting manipulations in real images. However, the field of 'generating fake images from scratch' is relatively new. Consequently, the existing detection methods for detecting manipulation in real images fall short when applied to these types of image, since they cannot be applied to completely generated images.

The inventors found that the known methods for detecting computer generated images (that is images generated from scratch) all function using essentially the same approach. The known methods may first perform the steps of "Get Real Image Dataset" 110 and "Get Generated image Dataset" 115. As described in these steps, the methods may import a real image dataset, from for example an image library, and may import or generate a fake image dataset.

In an extracting step, the method may "Perform Feature Extraction" 120. Feature extraction may be performed by, for example, a convolutional neural network or any other suitable NN, using known techniques. In a training step, the method may "Train a classifier" 130, to classify an input image as either real or fake. The input image may be classified as either real or fake by a fully connected layer of the convolutional neural network.

While state-of-the-art methods may effectively identify computer images created with known techniques, the inventors found that they often fail when confronted with images produced by unfamiliar or new techniques. This limitation reduces their practicality in real-world scenarios, where unknown or new image generation methods might be employed to create deceptive content.

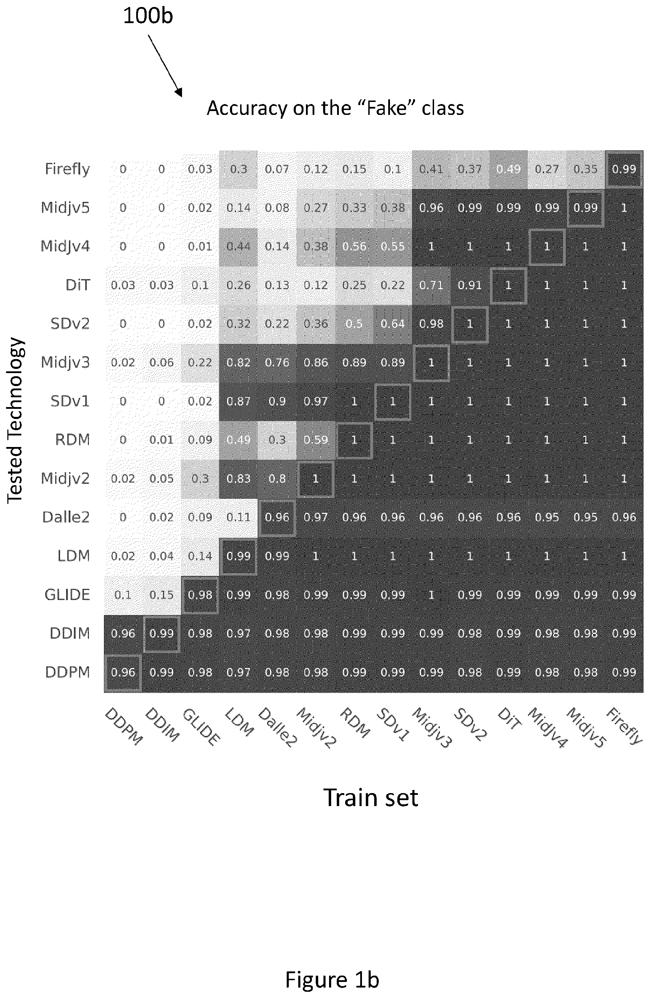

**Figure 1b** shows a comparison 100b of the accuracy of various known methods for fake image detection. The figure is taken from Epstein, D. C., Jain, I., Wang, O., & Zhang, R. (2023). Online detection of ai-generated images. In Proceedings of the IEEE/CVF International Conference on Computer Vision (pp. 382-392). Each of the known methods rely on a supervised learning technique. That is, each model is trained using generated images. The y-axis in the Figure shows the type of detector model while the x-axis shows the model used to generate the computer-generated images for training each model. The accuracy of each model is expressed using an accuracy metric, i.e., the ratio of correct predictions (both true positives and true negatives) to the total number of cases examined. In general, in this field, the method performance may be evaluated by accuracy, f1 or AUC metrics. Specifically, in this Figure, the accuracy metric was used for evaluation.

The evolution of detecting AI-generated image technologies has primarily relied on supervised learning methodologies. Common approaches utilize standard CNNs trained on a mix of real and generated images to distinguish between them. Building on this, subsequent research advanced these techniques by identifying and integrating key phenomenological features that enhance the distinction between real and generated images. However, these approaches rely on extensive datasets of generated images, limiting their generalizability to new and unseen generative techniques.

Recent studies have proposed alternative methods to enhance generalization in detecting images created by unseen generative techniques. Unsupervised and semi-supervised methods aim to reduce the reliance on extensive labelled datasets; however, they still rely on access to various generative methods during training, leading to biases towards those methods. Despite various methods which aim to improve generalizability, the field still struggles with the challenges of rapid technological evolution and generalization across unseen models, in both generalization and restricted data settings.

The inventors found that the existing detection methods have predominantly focused on analysing the images themselves rather than the model fingerprint and behaviour when faced with these images. This limits their effectiveness against evolving and more sophisticated image generation methods such as diffusion models.

As shown in the Figure, the accuracy of each model reduced if an input test image was generated using a different technique than which the model was trained on. The current models tend to fail to detect unknown techniques, which makes them impractical against actual threats in the real world.

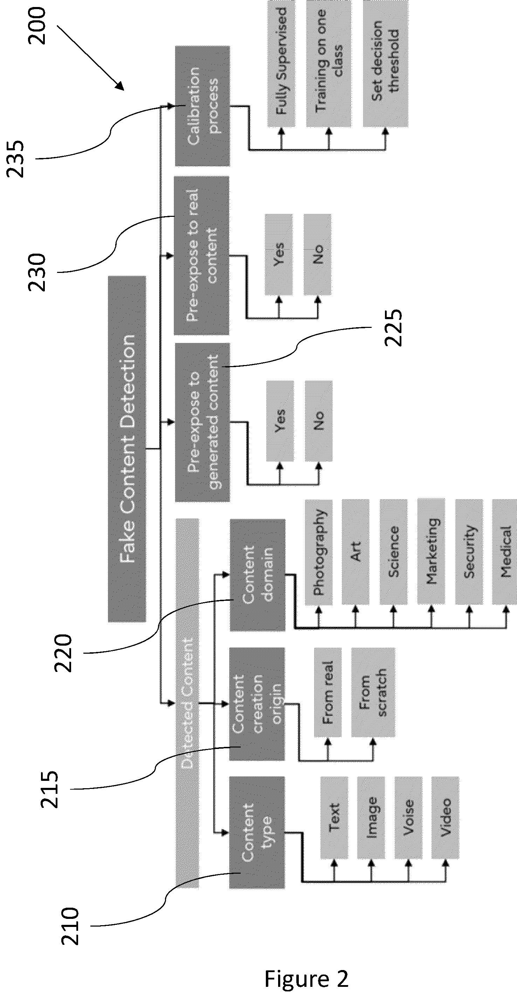

**Figure 2** shows a fake content detection taxonomy 200. The inventors' identified the following categories which may be considered for a detection method.

Content type 210: the detected generated content may come in different forms such as generated images (e.g., fake celebrity photos), generated text (e.g., phishing emails), generated audio files (e.g., fake recorded phone calls), etc.

Content creation origin 215: The detected generated content may be created by manipulating existing content (e.g., a real image, an existing text, etc.) or be generated from scratch.

Content domain 220: The detected generated content may relate to different knowledge domains.

Pre-expose to generated content 225: The detector model may be exposed to computer generated (fake) content during its training/calibration process.

Pre-expose to real content 230: The detector model may be exposed to real content during its training/calibration process.

Calibration process 235: The method in which the detector is trained/calibrated. Fully Supervised - the detector is trained by learning to separate real and fake content while being exposed to both classes. Training on one class -the detector is trained by learning the characteristics of only one class (real or fake) while being exposed only to this class. Set decision threshold - the detector is not trained and only the decision threshold is set according to a pre-defined small set of samples.

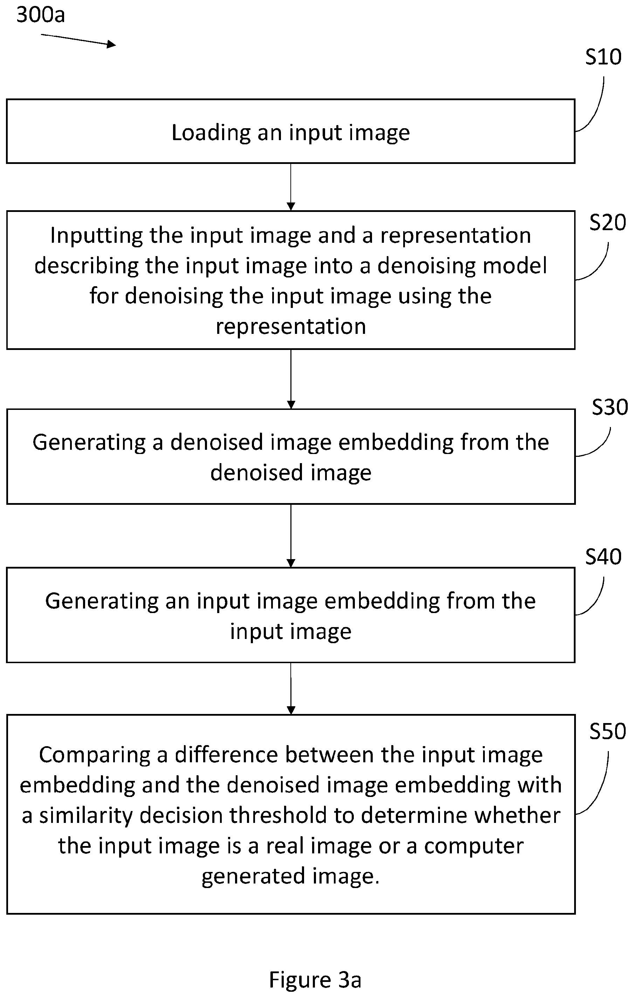

**Figure 3a** shows steps of a method 300a for detecting computer generated images, developed by the inventors. The steps of the method may be performed by a computer and may therefore be computer-implemented. A computer-generated image may be fake image. That is, a computer-generated image may be an image generated by artificial intelligence/an artificial neural network. Hence, the computer generated image may be referred to as a fake image or artificially generated image.

A computer-generated image may be generated from scratch. The computer-generated image may be generated from a prompt, such as a text prompt. The computer-generated image may be generated from scratch in that the generated image is not a result of editing or manipulating an existing image. A fake image may be an image generated by an artificial neural network. The AI/artificial neural network may not use an input image to generate the image. That is, a real image may not be used as a prompt for the neural network (but of course existing images may be used to train the AI/ANNs to generate the computer-generated images).

In a loading step s10, an input image may be loaded. For example, an image of interest, which is not known to be real or fake may be loaded. The input image may be automatically loaded. For example, the input image may be retrieved or scraped from a web page, such as from a news outlet or social media. Alternatively, the input image may be input by a user.

In an inputting step s20, the input image and a representation describing the input image may be input into a denoising model for denoising the input image using the representation. The denoising model may be a pretrained denoising model. For instance, the denoising model may be a pretrained diffusion model (e.g., a denoising diffusion probabilistic model, DDPM). The input image may be denoised by the denoising model using the representation. That is, the denoising model may take the representation as an input and denoise the input image to generate a denoised input image.

The representation describing the image may be a text description of the image. The text description may be generated using, for example an image-to-text model. An example of an image-to-text model used to generate a text description is nlpconnect/vit-gpt2-image-captioning. The image-to-text model may receive the input image and generate a text description of the image. The representation may be loaded as an input along with the image. For instance, the input image and representation may be input by a user.

Alternatively, the input image may be provided as the only input (for example by a user), and the representation (e.g., the text description) may be generated, or loaded, using for example the image-to-text model. That is, the image-to-text model may be an internal model used in the method. The inventors found that, by requiring only an image as an input, the method became more practical. That is, the method may be more practical in the sense that a user may not be required to generate the text representation externally and input the representation along with the image.

Further examples of the representation describing the image may be a scene graph, a scene graph triplet, and/or labelled bounding boxes around objects in the input image. Of course, any suitable modality may be used as the representation.

The representation may be tokenized and or converted to an embedding before being input into the denoising model.

An example of a denoising model is the stable diffusion model (CompVis/stable-diffusion-v1-4). The diffusion model may be stored locally. For instance, the diffusion model may be stored on a computer performing the steps of the computer-implemented method. Alternatively, the diffusion model may be stored remotely, for example in the cloud or on a network, and may be accessed remotely when performing the method. In an example, the entire system (for example the system implementing the method) may be hosted in the cloud. In this setup, a user may upload an image through, for example, an API, and the system may then analyze it and respond with whether the image is computer-generated or real.

The denoising model may be trained on primarily real images. The real images may be imported or received from a real image database. In another aspect, the denoising model may be trained on only real images. The denoising model may therefore be referred to as a pretrained denoising model. The detection method may be referred to a zero-shot method as, in an example, the model is not exposed to any computer generated images for training.

The input image may be denoised by a single iteration denoising step. That is, the input image may be denoised only once by the denoising model.

In generating step s30 a denoised image embedding may be generated from the denoised image (that is from the denoised image output from the denoising model). The denoised image embedding may be generated by inputting the denoised image into an image autoencoder. For example, a CLIP embedding may be generated as the denoised image embedding ("Contrastive Language-Image Pretraining" CLIP, Radford, A., Kim, J.W., Hallacy, C., Ramesh, A., Goh, G., Agarwal, S., Sastry, G., Askell, A., Mishkin, P., Clark, J. and Krueger, G., 2021, July. Learning transferable visual models from natural language supervision. In International conference on machine learning (pp. 8748-8763). PMLR.). That is, the image may be converted into a multimodal embedding. For instance, text describing a scene and an image of said scene may be assigned the same or substantially similar multimodal embeddings, as is the case with a CLIP embedding. The denoised image embedding may be generated using an image encoder, such as a CLIP image encoder.

In another generating step s40, an input image embedding may be generated from the input image. The input image embedding may be a CLIP embedding. The input image embedding may be generated using an image encoder, such as the CLIP image encoder. Thus, the input image embedding and/or denoised image embedding may be generated using an image encoder.

In a comparing step s50, a difference between the input image embedding and the denoised image embedding may be compared with a similarity decision threshold to determine whether the input image is a real image or a computer-generated image.

A real image may be an image captured by an imaging device, such as a camera. That is, a real image may be a photograph and/or a still from a video. The real image may be unedited/not manipulated. The real image may be captured by a digital camera and/or smartphone, and may therefore be generated in a digital format. Additionally or alternatively, a photograph may be captured using a film camera, or any other analogue method, and may be converted to a digital photograph (e.g., by scanning).

The difference between the input image embedding and the denoised image embedding may be expressed as a cosine similarly or cosine similarity score. For instance, the similarity decision threshold may be set based on a mean and standard deviation of a similarity between real images and corresponding denoised real images. The denoised images may be denoised by the denoising model. For example, in an initialisation step, real images, for example 1000 real images, may be input into the denoising model. The denoising model may denoise each of the real images to generate denoised images. The mean similarity of each of the real images to their corresponding denoised image, summed with the standard deviation, may be taken as the similarity decision threshold. The similarity may be, for example, a cosine similarity. One or two or three or more standard deviations may be added to the mean similarity for the similarity decision threshold.

If the difference between the input image embedding and the denoised image embedding is higher than the similarity decision threshold, it may be determined that the input image is fake. If the difference between the input image embedding and the denoised image embedding is lower than the similarity decision threshold, it may be determined that the input image is real.

The method may detect computer-generated (fake) images by modelling the distribution of the "real" image class and identify the "fake" image class.

The method may utilize an adapted version of the denoising process of (stable) diffusion models to leverage unique characteristics of "fake" images.

Upon determining whether the input image is a real image or a computer-generated image the method may further comprise outputting whether the input image is a real image or a computer-generated image on a graphical user interface (GUI). The GUI may be displayed on a screen or display, such as a computer monitor. A user may interact with the GUI and may be presented with the determination.

The method may be used to verify if the input image is a computer-generated image. For instance, a preliminary determination that the input image is a computer-generated image may be performed by another detection model and the method using a denoising model described herein may be used for verification. The other detection model may be used before inputting the representation and input image into the denoising model.

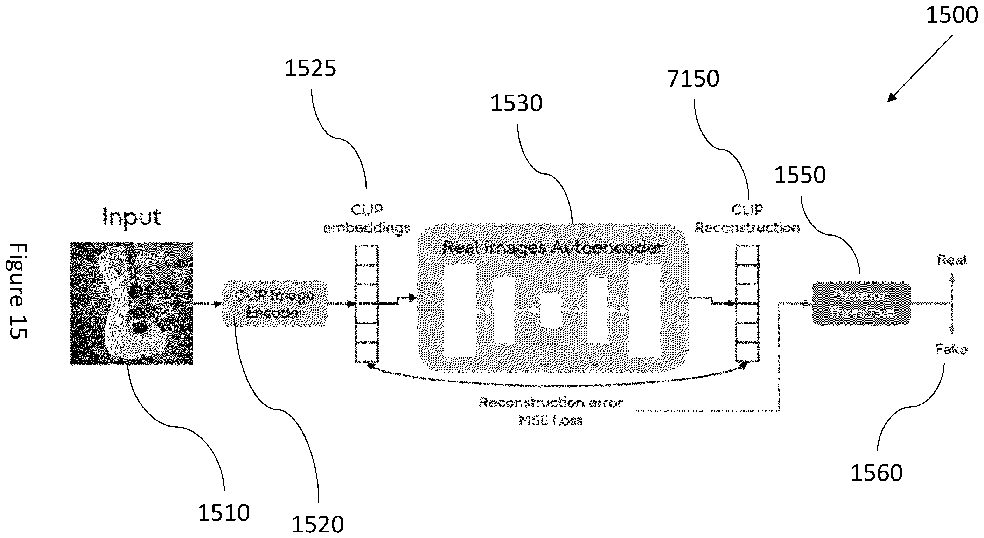

Thus, before inputting the representation and input image into a denoising model the following steps may be performed: converting the input image into an input image embedding; inputting the input image embedding into a pre-trained image autoencoder, wherein training images of the pre-trained image autoencoder are primarily real images; generating an autoencoder embedding of the input image embedding as an output of the autoencoder; performing a preliminary determination that the input image is a computer-generated image by comparing a difference between the input image embedding and the autoencoder embedding with an autoencoder decision threshold. Further detail of the other detection model and further steps above are described in relation to Figure 15 below.

The method described herein may have the following benefits: Pioneering approach: utilize a customized version of the denoising process of stable diffusion models to leverage unique characteristics of "fake" images. Up-to-date by design: can detect images that were generated by new generation techniques without any change or update to the detection process. No access to any corpus of generated images, which results in a low-maintenance generation-generic detection approach. Minimal access to a real image corpus is required for setting up the similarity threshold.

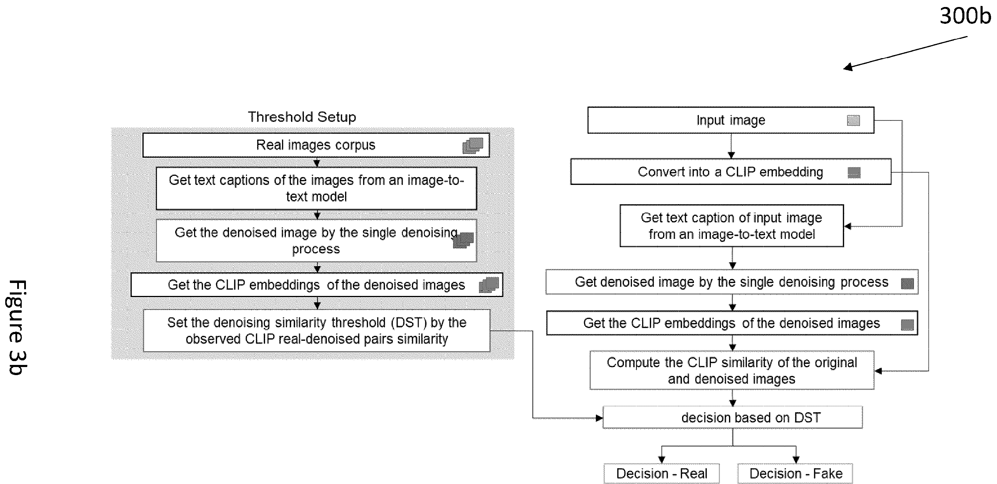

**Figure 3b** shows a combined threshold setup and implementation of the method described herein. The righthand side of the Figure shows an exemplary implementation of the method described in relation to Figure 3a above.

The lefthand side of the Figure shows a setup for the similarity decision threshold (referred to as a denoising similarity threshold in the Figure). As shown in the Figure, the similarity threshold may be set using real images. That is, images which have been verified to be real. The threshold set up may be performed before the implementation of the detecting method.

As shown in the Figure, the threshold set up may follow a substantially similar method than the implementation method. The inventors used a pre-trained diffusion model to perform a single denoising iteration. For threshold calibration, 1000 real images were selected and processed according to the method pipeline described above. For example, an image is loaded from a real image corpus and a representation of the image is loaded/generated, in this example a text description of the image is generated using an image-to-text model. The image and representation are input into a denoising model and denoised using a single denoising process. Embeddings, in this example CLIP embeddings, are generated for the input real image and the denoised real images, and a similarity determined the two embeddings is used to set the similarity decision threshold. In particular, the similarity decision threshold used the mean and standard deviation (that is +1std) of the similarly of the 1000 real images. The similarity was determined using a cosine similarity. The determined similarity decision threshold was set as the similarity decision threshold for the implementation of the method. The inventors verified that the 1000 real images were indeed real images by selecting images that were taken before the GenAI era (that is, before 2014). The inventors empirically selected the number of images (1K).

The method and detector model developed by the inventors may identify generated images based on their similarity to a denoised version. The method and model may use a customized denoising process from stable diffusion models to leverage the unique characteristics of generated images. The method and model may only be exposed to real images during its components training and threshold setting. Further, the method and model may leverage and customize the denoising process of stable diffusion models, enable the detection of images generated by new unknown generation technologies, perform a novel customization of text-to-image models' generation process for detection purposes and, customize the denoising process for reviling a new representation of the examined image.

The inventors had full control over the calibration image dataset. The images in the dataset may be images selected for calibration where it is certain or substantially certain that they are not generated by a computer (or machine). In an example, if the calibration set was not pre-verified (e.g., the dataset was provided externally), the calibrated output of the 1000 images may be analyzed and outliers may be removed that could be derived from machine generated images. While the inventors used 1000 images, of course, any suitable number of images may be used (for instance any number of images which give a statistically meaningful result for the similarly scores).

While the inventors used only real images it may be understood that the method may still be effective if the calibration dataset uses primarily real images, so that a few (for example less than 10% or less than 5%) of the images are artificially generated. This will allow for the accidental inclusion of fake images in the training data set. For instance, if there are only one/a few computer-generated images in the calibration set, the effect on the threshold may be negligible, and may not damage the detection performance. If there are more than a few computer-generated images, these images may be omitted by simple outlier removal.

Not shown in the Figure is the training scheme for training the denoising model. As previously mentioned, the denoising model used by the inventors was a diffusion model. In particular, the inventors used a latent diffusion model. The latent diffusion model used by the inventors was a conditioned latent diffusion model. An example of a conditioned latent diffusion model is the stable diffusion model. The stable diffusion model is conditioned on a text input.

The denoising model used by the inventors was a pre-trained diffusion model. The pre-trained diffusion model, for example, the stable diffusion model, may be trained on primarily real images. In an example the diffusion model may be trained on only real images. Of course, the diffusion model may be trained on a mix or real and generated images or only generated images. The similarly decision threshold may vary depending on the dataset used to train the denoising model. The inventors used a pretrained diffusion model trained on only real images. The inventors found that current diffusion models tend to be trained only on real images.

The diffusion model may be trained during a forward process. The diffusion model may be trained by, loading a training image, from for example a training image dataset, generating a random noise representation, adding the random noise representation to the training image one or more times, and adjusting the weight of a noise predictor of the denoising model (e.g., diffusion model) to predict the random noise representation added to the image. The process may be repeated for each training image in the training image dataset.

The noise predictor may be trained by exposing the noise predictor to the training image and adjusting weights of the noise predictor to minimize an error. The noise predictor may be comprised in a UNet architecture. The random noise may be a k-dimensional random noise. The random noise may have the same dimension as the training image. The training process may be repeated for each training image.

The training may be performed in a latent space. A training image may be a 512x512x3 image. The training image may be converted to a latent size of 64x64x4. The training may be performed in a latent space by using a variational autoencoder (VAE). The variational autoencoder may comprise an encoder and decoder. The encoder may convert the training image into a latent representation, and the decoder may convert the latent representation back to the same size as the training image.

Thus, in the latent space, the training image may be represented by a tensor in the latent space, which may be referred to as a training image latent tensor. The random noise representation may also be represented by a tensor in the latent space, and may therefore be referred to as a random noise latent tensor.

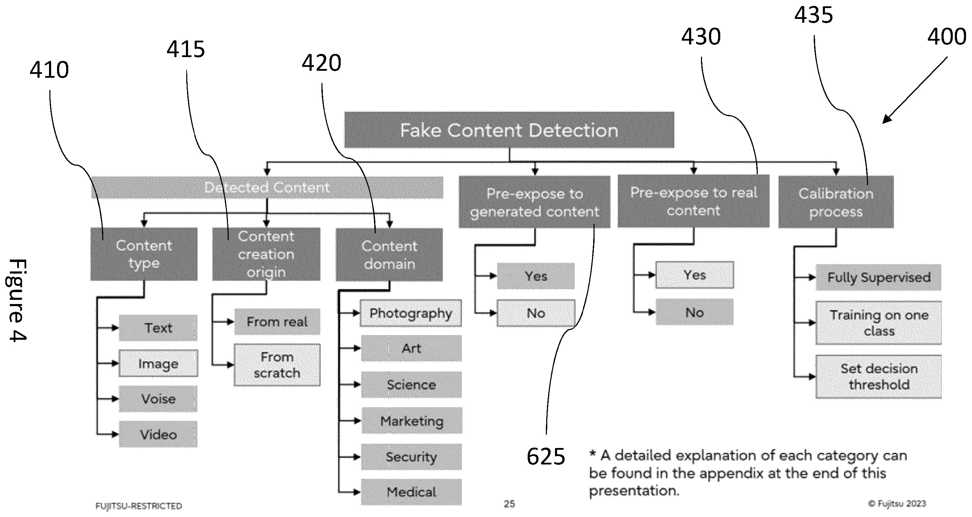

**Figure 4** shows a computer-generated content detection taxonomy 400 for the method developed by the inventors. The method described herein, for example in relation to Figure 3, may be categorised as follows:

Content type 410: the detected generated content may be input as an image into the detector model.

Content creation origin 415: The generated content (generated image) may be generated from scratch. For example, the generated content may be created by an AI/NN model. The content may be generated from a prompt by a user, such as a description of a desired image.

Content domain 420: The generated content may relate to different knowledge domains, in this case photography.

That is, the input image may be a fake, generated image in the style of a real image taken using an imaging device.

Pre-expose to generated content 425/ Pre-expose to real content 430: the detector model may be trained on primarily real images. Preferably the detector model may be trained on only real images (and no fake images).

Calibration process 435: The detector may be trained on only one class (real images) and may learn the characteristics of that class. Further, a set decision threshold may be used for example a (pretrained) denoising model may be used and the decision threshold may be set according to a pre-defined small set of samples, as described above.

Zero-shot detection of generated text via Large Language Models (LLMs) analysis has been successfully employed to identify text generation. In the zero-shot setting, a pre-trained model is used to solve a task it was not trained for, without any training, i.e. these methods leverage the models' knowledge over their pre-training data. The inventors have realized that this kind of technique can be valuable in the image domain and have developed methods for detecting fake, generated images in a zero-shot setting.

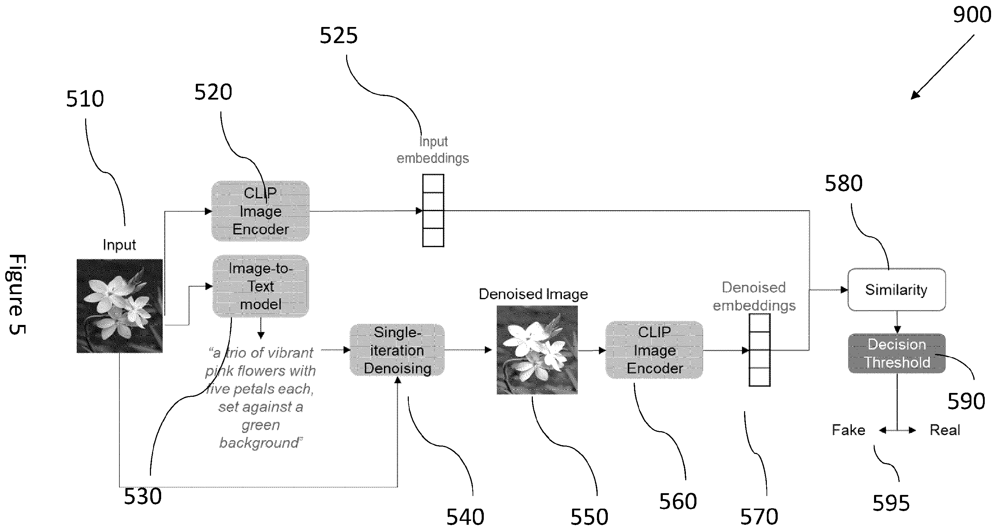

**Figure 5** shows an example architecture 500 for detecting computer generated images. The architecture may correspond to the method described in relation to Figure 3 above and may be referred to as a detection model. Each item in the Figure may be referred to as a block or module (for instance a "CLIP image encoder" block or "image-to-text model" module). As described above, the method may perform detection according to a similarity with a denoised image.

An input image 510 may be input into the model. It may be unknown whether the input image is a real image of a fake, computer generated image.

The input image may be received by a CLIP image encoder 520. The input image may be converted to a CLIP embedding 525 by the CLIP image encoder. While the inventors used the CLIP image encoder, of course, any suitable image encoder may be used. Of course, the embedding generated by the image encoder may depend on the image encoder used.

The input image may be input into an image-to-text model. The image-to-text model may generate an image caption, or description, of the input image. The image to text model used by the inventors was the nlpconnect model (nlpconnect/vit-gpt2-image-captioning). The model was retrieved from the huggingface website (https://huggingface.co/ [accessed 06 September 2024]). As shown in the Figure, the image description for the example input image may be "A trio of vibrant pink flowers with five petals each, set against a green background".

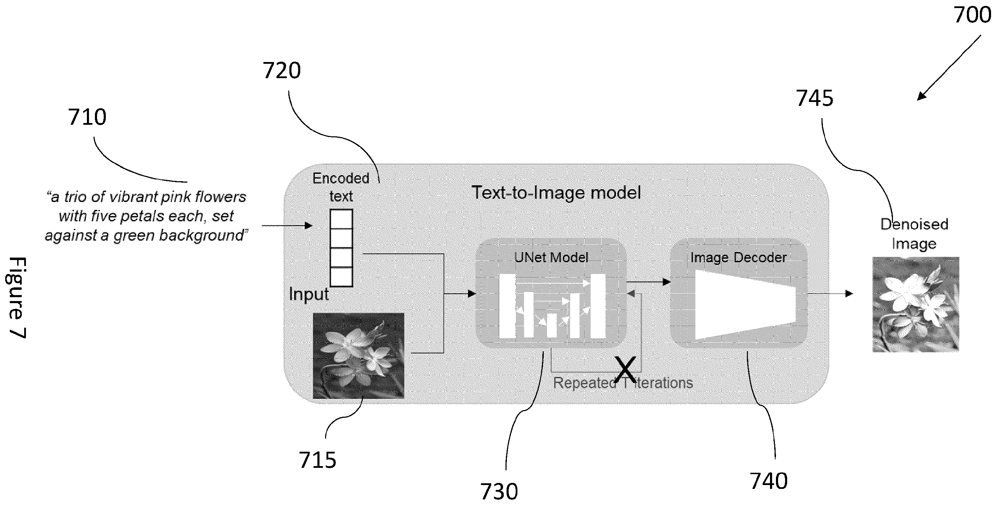

The image description may be input into a denoising model (for example the single-iteration denoising 540 shown in the figure) along with the input image. The denoising model may be a diffusion model and is discussed in more detail in relation to Figures 7-11 below. The denoising model may take the input image and description and denoise the input image only once, based on the description. That is, the input image may be denoised in a single iteration.

The image description may be pre-processed before being input into the denoising model. For instance, the description may be tokenised and encoded before being input. The inventors used the CompVis text tokenizer and text encoder (CompVis/stable-diffusion-v1-4, retrieved from huggingface) to preprocess the description.

While a text description is described above, in another example the diffusion model may accept any suitable representation describing the input image. The stable diffusion model used by the inventors accepted a text description. However, other denoising models may accept for example, a labelled representation of the image, a scene-graph, a sketch and/or labelled bounding boxes.

The denoising model may output a denoised image 550. The denoised image may be a denoised version of the input image. The denoised image may be the same size and dimension as the input image.

The denoised image may be input into an image encoder, such as a CLIP image encoder 560, to generate a denoised (image) embedding 570. The difference between the input image embedding and the denoised image embedding may be compared with a similarity decision threshold 590 to determine whether the input image is a real image or fake 590 (that is whether the image is a computer-generated image).

The difference between input image embedding and denoised image embedding may be determined using a similarity. For instance, a cosine similarly score may be determined between the two embeddings.

The similarity decision threshold 990 may be set according to the mean plus standard deviation of the similarity between real images. For example, the inventors used 1000 real images to set the similarity decision threshold.

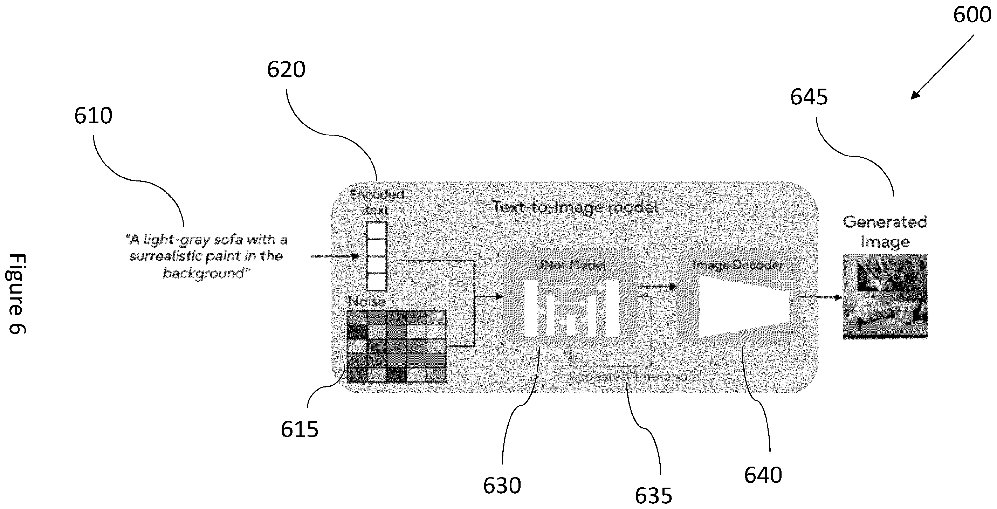

**Figure 6** shows an example of a known method 600 for generating an image from noise using a diffusion model. General principles of diffusion models are as follows:

Diffusion Model Setting

Diffusion models are generative models which may produce high-quality samples in various domains. They operate by an iterative generation process of noise reduction based on a pre-set noise schedule.

Let a data manifold be $\Omega \subset \mathbb{R}^d$, where d is the data dimensionality, and denote a sample $x \in \Omega$. Initially, sample $x_T \sim N(0, I)$. Each iteration $t$ involves denoising $x_t$ via a neural network $f(x_t, t; \theta)$ ($\theta$ are tuneable weights of the neural network, i.e., the diffusion model), subsequently progressing to $x_{t-1}$. This sequence terminates at $x_0 \in \Omega$, representing the final output. In this setting $x_0$ is an image.

This generation process is known as reverse diffusion, where during training, $f$ is optimized to reverse a *forward diffusion* process, defined using scheduling parameter $\alpha_t \in R^+ \forall t$, and noise $\varepsilon \sim N(0, I)$ as follows:

$$x_t = \sqrt{1 - \alpha_t} x_0 + \sqrt{\alpha_t} \epsilon. \quad (1)$$

Score-Function in Diffusion Models

The score-function in diffusion models may be defined as $\nabla \log p(x)$, where $p(x)$ is the probability of $x$. Let $p_{\alpha_t}(x_t)$ be the probability of $x_t$ considering Eq. (1). The founding works of current known diffusion models *Song and Ermon [2019, 2020], Kadkhodaie and Simoncelli [2021]* capitalize on Eq. (1), analysing it from a score-function perspective based on the following seminal result *Miyasawa et al. [1961]*.

$$\nabla \log p_{\alpha_t}(x_t) = \frac{1}{\alpha_t} \left( \sqrt{1 - \alpha_t} \mathbf{E}_x [x_0 | x_t] - x_t \right), (2)$$

as follows: $\mathbf{E}_x [x_0 | x_t]$ is the Minimum Mean-Squared-Error (MMSE) denoiser of $x_t$. Thus, it is replaced with the output of a denoising model $\hat{x}_0 = f(x_t, t; \theta)$, i.e.

$$\nabla \log p_{\alpha_t}(x_t) \approx \frac{1}{\alpha_t} \left( \sqrt{1 - \alpha_t} \, f(x_t, t; \theta) - x_t \right), (3)$$

Often, $f(x_t, t; \theta)$ predicts noise, i.e. $\hat{x}_0 = \frac{1}{\sqrt{1-\alpha_t}} \left( x_t - \sqrt{\alpha_t} f(x_t, t; \theta) \right)$.

Finally, replacing $f(x_t, t; \theta)$ with the true $x_0$, results in $\nabla \log p_{\alpha_t}(x) = -\frac{1}{\sqrt{\alpha_t}} \epsilon$, i.e. Eq. (3) approximates $\varepsilon$ up to a known factor. It is straightforward that, despite $\Omega$ being a zero-measure of $\mathbb{R}^d$ ($\Omega$ is assumed to have a dimension much lower than d), the probability of $x_t$ is non-zero on the entire $R^d$ space. With $\nabla \log p$, the generation process may be simulated as Itô's SDE *Ito et al. [1951]*,

$$\dot{x}(\tau) = \nabla_x \log p(x(\tau)) + \sqrt{2} \mathrm{w}_\tau, (4)$$

where $\dot{x}(\tau)$ is the time derivative of $x(\tau)$, and $w_\tau$ the time derivative of Brownian motion $w(\tau)$, i.e. it injects noise to the process. Since *Song and Ermon [2019]*, the generative process accounts for a $p_{\alpha t}$ that changes in time - which generalizes Eq. (4). With that said, the inventors employed a fixed-point analysis of $p_{\alpha t}$ for a fixed $\alpha_t$. The commonly used time here is reversed, i.e. large $\tau$ implies small t. The inventors consistently worked with t.

As shown in Figure 6, in diffusion models, an encoded prompt and random noise 615 may be fed into a UNet model 630. In this example, the encoded prompt is a description "A light-gray sofa with a surrealistic paint in the background". The prompt is encoded using a text encoder to generate encoded text 620.

The UNet model accepts the encoded text and random noise as an input and processes its output for T iterations 635. That is, the UNet model denoises the random noise, as described by the equations above, in each iteration and takes the denoised image from each iteration as the input for the next iteration. After a preset number of iterations the final output is decoded, using an image decoder 640 into the generated image 645.

**Figure 7** shows a method 700 for detecting fake images using a denoising model, developed by the inventors. The inventors developed a single iteration denoising process based on a text-to-image stable diffusion model. A representation, in this example a text description 710, describing an input image and the input image 715 may be input into the denoising model, as described above. The text description may be generated using an image-to-text model, as described in relation to Figure 5. The text description may be encoded using a text encoder to generate encoded text 720. Of course, if the denoising model accepts, for example, a different modality or type of input, any suitable representation describing the image may be input into the denoising model.

The encoded text 720 and input image may be input into a UNet model 730 of a denoising model. In contrast to known denoising methods, in the single iteration denoising process developed by the inventors, the random noise (for example the random noise 615 in Figure 6) is replaced by the input image. The UNet model takes the input image and performs only one iteration. That is, the UNet model denoises the input image only once. By that, the "noise" in the input image that is irrelevant to the prompt is "reduced", i.e., the input is denoised.

The denoised input image representation may then be input into an image decoder of the denoising image to be decoded to generate a denoised image 745.

Additionally, an input image embedding may be generated for the input image. For example, an image encoder, such as the CLIP encoder, may be used to generate a CLIP embedding. Similarly, a denoised image embedding may be generated for the denoised image. Then, the (CLIP) embeddings of the input image and the denoised image may be compared with a similarity decision threshold.

The inventors found that by adapting a denoising model to perform a single denoising iteration, the method described herein may effectively detect computer generated images. That is, the method developed by the inventors may be for detecting image which have been synthesised by a computer, e.g., by generative synthesis.

The reasoning and mathematical proof for the effectiveness of the method developed by the inventors is as follows:

The inventors used a generative model pre-trained on scraped, real data (i.e. real images) and identified a potential to circumvent the problematic datasets of generated content in the image domain.

The inventors found that generated and real images may be characterized in the zero-shot setting by integrating the theoretical score function perspective of diffusion models with non-Euclidean manifold. In this instance, a zero-shot setting may be understood as a setting in which the task performed by a model was not presented to the model during training. For example, the method described herein may perform detection (of generated images) using the model, without the model being trained to do so (that is without the model being exposed to generated images during training).

Unique challenges arise when employing such a framework for image generative technology: current leading image generative methods, namely diffusion models and Generative Adversarial Networks (GANs) are implicit in their probabilities, i.e. they do not explicitly provide the probability of their generated images, and instead learn to sample high-probability samples from an implicit data manifold. To this end, the inventors used a pre-trained diffusion model for its ability to approximate the score function for a probability density p,

$$S = \nabla \log p. \quad (5)$$

The inventors analyzed the manifold defined by a function surface log p. Considering the surface curvature H,

$$H \propto \nabla \cdot \left( \frac{\nabla \log p}{|\nabla \log p|} \right), \quad (6)$$

see details on this formulation and its relation to the (negative) subgradient of the total-variation energy in Aubert et al. [2006], Kimmel et al. [1997], unlike S, it is not straightforward to access H. The inventors developed mathematically-founded ways to access such properties in the image generative setting, and devised a zero-shot framework for generated image detection (e.g., see Figures 3, 5, 8a and 8b for example), out-performing state-of-the-art in data-restricted regimes. Provided herein is a theoretical point of view, combining classical manifold analysis techniques together with a diffusion model score function. Consequently, the inventors developed a method for distinguishing between generated and real images.

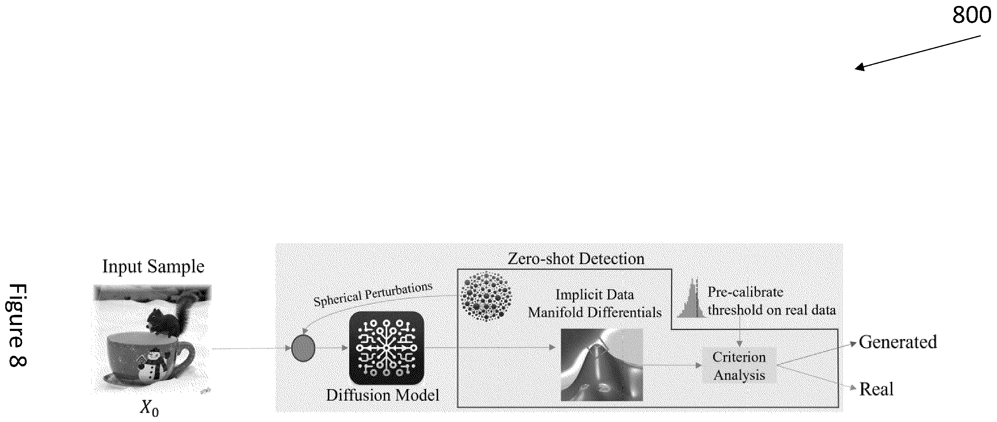

**Figure 8** shows an example pipeline 800 for detecting computer-generated images, developed by the inventors. The Figure shows concepts based on a mathematical founding of the method, and in particular the use of spherical perturbations, described below. The proposed zero-shot detection pipeline may circumvent the need for computer-generated data for training. An input image x0 may be subjected to a pre-trained diffusion model, and spherical perturbations. This may set the stage for the mathematical characterization of x0 described below, resulting in a criterion to determine if an input image is computer generated.

A noisy image may be the input of the denoising model. The noise may be drawn from a spherical distribution. While this deviates slightly from the usual Gaussian noise distribution used for diffusion models, the inventors found that it may enable ease of mathematical analysis and also may be very similar to Gaussian noise. This similarity may be referred to as the "concentration of measure".

Fixed-Point Geometric Analysis

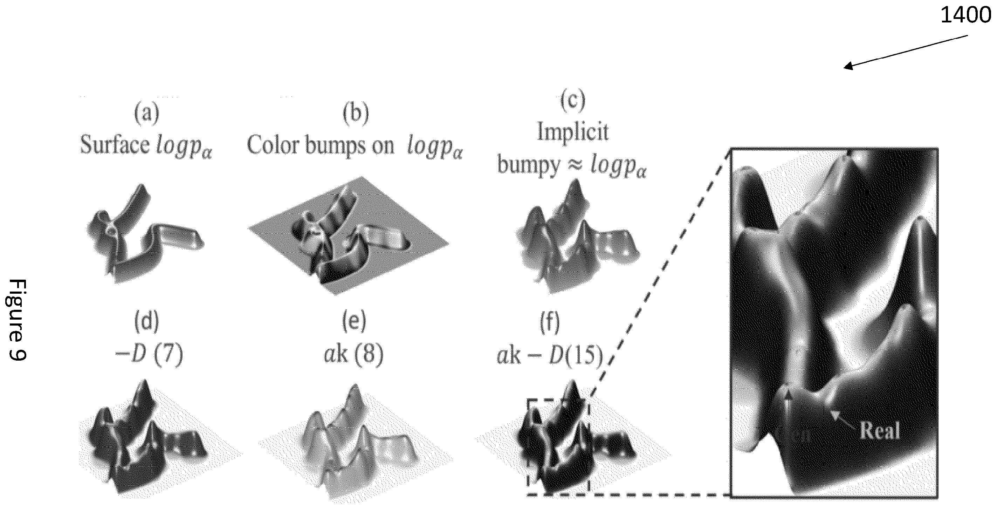

Considering the description provided in relation to Figure 6 above, a generated sample $x_0$, following Eq. (6), may be expected to be a stable local maximum in the learnt log probability manifold - hence $x_0$ may be expected to be a point of positive curvature and of low gradient in that domain. Conversely, real data points that are unlikely to be generated will not exhibit these characteristics. Essentially, the learned manifold may be expected to be "bumpier" than the actual data manifold, with generated data appearing as peaks on this bumpy surface. A graphical illustration of this idea is provided in relation to Figure 9. To test $x_0$ for these characteristics, the inventors worked in the local neighbourhood of $x_0$. A fixed-point analysis was employed, "freezing" the generative process at a small t. it was assumed that $\alpha_t$ is small enough for $p_{\alpha t}$ to approximate the data distribution and large enough for $p_{\alpha t}$ to be smooth. Since t is fixed, $\alpha$ may be used (without t) from now on. Relying on the smoothness of $p_\alpha$, $\log p_\alpha$ may be used to construct a $d$ manifold embedded in $\mathbb{R}^{d+1}$ as a parametric hyper-surface of the form $(x, \log p_\alpha(x))$, for which the total-variation curvature of Eq. (6) applies.

Denote $B_0$ the local neighbourhood of $x_0$ and $\partial B_0$ as its boundary, and their respective volumes |B0|, |∂B0|. Let $\langle \cdot, \cdot \rangle$, $\|\cdot\|_2$ denote the Euclidean inner product and norm. The inventors employed a gradient criterion,

$$D(x_0) := \frac{1}{|\partial B_0|} \int_{\partial B0} \|\nabla \log p_\alpha(x)\|_2 \, dx \qquad (7)$$

as well as a curvature criterion,

$$\kappa(x_0) := \frac{-1}{|B_0|} \int_{B0} \nabla \cdot \frac{\nabla \log p_\alpha(x)}{\|\nabla \log p_\alpha(x)\|_2} \, dx \qquad (8)$$

Note the minus sign, which ensures that an inward pointing gradient (negative divergence) is associated with positive curvature, and vice versa. $B_0$ was chosen to be the ball,

$$B_0 = \{x : \| \sqrt{1-\alpha}x_0 - x \|_2 < \sqrt{d\alpha}\}, \qquad (9)$$

The inventors found that this $B_0$ may be practical (ensuring $x_0 \in B_0$, may require $1 - \sqrt{1-\alpha} < \sqrt{d\alpha} \| x_0 \|_2$ ) as its spherical boundary $\partial B0$ (and its close neighbourhood) is highly probable under $p_\alpha$, and the score function on $\partial B0$ may be approximated via the diffusion model at a fixed t (Eq. (3)). Additionally, $\partial B0$ may be easily sampled as

$$\tilde{x} = \sqrt{1-\alpha}x_0 + \sqrt{\alpha}u_d \qquad (10)$$

where $u_d \sim \mathrm{Unif}\left(S^{d-1}\left(\sqrt{d}\right)\right)$, i.e., $u_d$ is uniformly distributed on the surface of the (d - 1)-dimensional sphere centered at $\vec{0}$ with radius $\sqrt{d}$. Clarification:

V $\log p_{\alpha t}(\cdot)$ may be applied to samples of $\tilde{x}$, yet the inventors calculated the score function and its denoisers assuming it was sampled from $x_t$, namely Eqs. (2), (3) still hold, i.e.

$$\nabla \log p_\alpha(\tilde{x}) = \frac{1}{\alpha}\left(\sqrt{1-\alpha}\mathbf{E}_x[x_0|\tilde{x}] - \tilde{x}\right) \approx \frac{1}{\alpha}\left(\sqrt{1-\alpha}f(\tilde{x}, t; \theta) - \tilde{x}\right)$$

$$:= h(\tilde{x}), \qquad (11)$$

where $h(\tilde{x})$ denotes the diffusion-model approximation of the score function.

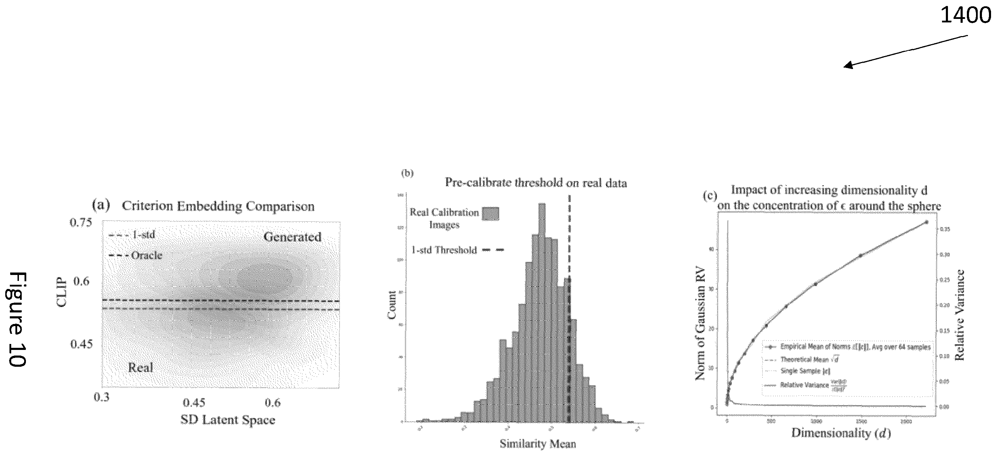

Notice the close relation between $\tilde{x}$, constructed with $\alpha \leftarrow \alpha_t$ and $x_t$: As d increases, the probability of $\|\varepsilon\|_2$ ($\varepsilon$ of Eq. (1)) is concentrated around its mean $\sqrt{d}$, reducing the norm's stochastic nature - making $u_d$ and $\varepsilon$ (and as a consequence $\tilde{x}$ and $x_t$) interchangeable in high dimension d, *Laurent and Massart* [2000], see also Figure 10. Thus, a model trained to denoise $x_t$ may perform well for $\nabla \log p_{\alpha t}(\tilde{x}_t)$ in the sense of Eq. (3), $\tilde{x}_t$ samples from the highest-probability sub-sphere of $p(xt)$.

In fact, in a high-dimensional setting, sampling $x_t$ that is far away from $\partial B0$ is highly improbable.

**Figure 9** shows a toy probability surface and in particular a simulation of toy data probability in a two-dimensional space (d = 2), structured along a one-dimensional manifold ($\Omega$ is a curve). Each sub-figure in Figure 9 shows the following:

(a) The log probability surface of perturbed samples, considering a uniform probability on the $\Omega$ curve. (b) A simulation of the hypothesis that generative models learn a bumpy version of the manifold: Bumps are randomly assigned to the manifold and visualized in color on the original surface. (c) The resulting bumpy surface. (d) Gradient magnitude of the bumpy manifold. (e) Total-variation curvature of the bumpy manifold. (f) Demonstrates the differential property derived from our analysis, highlighting locally maximal points of the bumps which correspond to likely generated data points.

As described above in relation to Figure 7 and discussed below, the inventors developed a mathematical method to capture the above properties through a zero-shot analysis of the diffusion model.

Mathematical Results

Statement 1. Given an image $x_0$ and a sample $x \sim \tilde{x}|x_0$, drawn according to Eq. (10), denote $u_d = \frac{x - \sqrt{1-\alpha}x_0}{\sqrt{\alpha}}$ (the notation of $u_d$ as a function of x, i.e. $u_d(x)$, expresses the fact that they are constructed using the same noise. This may be used under the integration sign when expressing explicitly expectations, where it may be crucial to decide on one variable to integrate upon), and set $\gamma = |\partial B0|$. Then the following relation holds:

$$-\boldsymbol{E}_{x \sim \tilde{x}|x0} \left\langle \frac{\nabla \log p_\alpha(x)}{\| \nabla log p_\alpha(x) \|_2}, \gamma u_d(x) + \nabla log p_\alpha(x) \right\rangle = \kappa(x0) - D(x0). \quad (12)$$

This provides a characterization of $x_0$ as a stable maximal point under the backward diffusion process, Eq. (4), quantifying both gradient magnitude (should be low) and curvature (should be high) aspects.

Proof Outline (full proof provided below): First, use Gauss divergence theorem for the curvature term

$$-|B_0|\kappa(x_0) = \int_{B_0} \nabla \cdot \frac{\nabla \log p_\alpha(x)}{\|\nabla \log p_\alpha(x)\|_2} \, dx = \int_{\partial B0} \langle \frac{\nabla \log p_\alpha(x)}{\|\nabla \log p_\alpha(x)\|_2}, \hat{n}\rangle dx \quad (13)$$

where $\hat{n}$ denote the outward-pointing normals to the sphere $\partial B0$. Using the properties of $\tilde{x}_t|x_0$, which is uniformly distributed on $\partial B0$, results in $E_{x \sim \tilde{x}|x0}(\cdot) \sim = \frac{1}{|\partial B_0|} \int_{\partial B_0} (\cdot)$.

Moreover, by construction $\hat{n} = \frac{x - \sqrt{1-\alpha}x_0}{\|\sqrt{1-\alpha}x_0 - x\|_2} = \frac{u_d(x)}{\sqrt{d}}, \forall x \in \partial B_0$. Hence,

$$\kappa(x_0) = -\frac{|\partial B_0|}{\sqrt{d}|B_0|} E_{x \sim \tilde{x}_t|x_0} \langle \frac{\nabla \log p_\alpha(x)}{\|\nabla \log p_\alpha(x)\|_2}, u_d(x)\rangle \quad (14)$$

Then, using the same properties of the uniform distribution $\tilde{x}_t|x_0$, obtain $D(x_0) = \boldsymbol{E}_{x \sim \tilde{x}_t|x_0} \langle \frac{\nabla \log p_\alpha(x)}{\|\nabla \log p_\alpha(x)\|_2}, \nabla \log p_\alpha(x)\rangle$. Finally - by linearity, and since $\gamma = \frac{|\partial B_0|}{\sqrt{d}|B_0|}$,

$$-\boldsymbol{E}_{x \sim \tilde{x}_t|x_0} \langle \frac{\nabla \log p_\alpha(x)}{\|\nabla \log p_\alpha(x)\|_2}, \gamma a u(x) - \nabla \log p_\alpha(x)\rangle = a\kappa(x_0) - D(x_0) \quad (15)$$

Where a=1 for the choice of that $\gamma$.

Corollary 2. In the setting of statement 3 below, there is the following approximation:

$$\frac{\sqrt{1-\alpha}}{\alpha} E_{x \sim \tilde{x}_t | x_0} \left\langle \frac{\nabla \log p_\alpha(x)}{\|\nabla \log p_\alpha(x)\|_2}, \hat{x}_0 \right\rangle \approx a\kappa(x_0) - D(x_0) \quad (16)$$

Proof: Outline (full proof is provided below). By linearity, decompose the expectation to summands via Eq. (11), i.e. $\hat{x}_0 = \sqrt{1-\alpha} x_0 + \sqrt{\alpha} u_d(x) + \alpha \nabla \log p_\alpha(x)$. Thus,

$$E_{x \sim \tilde{x}_t | x_0} \left( \frac{\nabla \log p_\alpha(x)}{\|\nabla \log p_\alpha(x)\|_2} \right) \approx 0, \quad (17)$$

since integration of normals over the sphere is zero, and $\nabla \log p_\alpha(x)$ approximates the uniform spherical noise. Thus, $E_{x \sim \tilde{x}_t | x_0} \left\langle \frac{\nabla \log p_\alpha(x)}{\|\nabla \log p_\alpha(x)\|_2}, \sqrt{1-\alpha} x_0 \right\rangle \approx 0$, since $x_0$ is deterministic. From here it is straightforward that dividing the (remaining two) summands by $\alpha$ leads to Eq. (15), with $\gamma a = \frac{1}{\sqrt{\alpha}}$.

Statement 3: Given $x_0$, consider Eq. (10), for which samples $x \sim \tilde{x}|x_0$ are drawn uniformly from the sphere $\partial B_0$, and each x is drawn with a corresponding $u_d(x) = \frac{x - \sqrt{1-\alpha} x_0}{\sqrt{\alpha}}$. Then use $\nabla \log p_\alpha(\cdot)$, and a tunable parameter $\gamma \in \mathbb{R}^+$ to obtain,

$$-E_{x \sim \tilde{x}_t | x_0} \left\langle \frac{\nabla \log p_\alpha(x)}{\|\nabla \log p_\alpha(x)\|_2}, \gamma u_d(x) + \nabla \log p_\alpha(x) \right\rangle = \kappa(x_0) - D(x_0) \quad (18)$$

This provides a characterization of $x_0$ as a stable maximal point under the backward diffusion process, Eq. (4), quantifying both gradient magnitude (should be low) and curvature (should be high) aspects.

Proof. Begin with the curvature term. By Gauss divergence Theorem,

$$-|B_0| \kappa(x_0) = \int_{B_0} \nabla \cdot \frac{\nabla \log p_\alpha(x)}{\|\nabla \log p_\alpha(x)\|_2} \, dx = \int_{\partial B0} \left\langle \frac{\nabla \log p_\alpha(x)}{\|\nabla \log p_\alpha(x)\|_2} \, dx, \hat{n} \right\rangle dx \quad (19)$$

where $n$ are the outward-pointing normals to the sphere $\partial B0$. By construction, $\hat{n} = \frac{x - \sqrt{1-\alpha} x_0}{\|\sqrt{1-\alpha} x_0 - x\|_2} = \frac{u_d(x)}{\sqrt{d}}, \forall x \in \partial B_0$, thus

$$\int_{\partial B_0} \left\langle \frac{\nabla \log p_\alpha(x)}{\|\nabla \log p_\alpha(x)\|_2} \, dx, \hat{n} \right\rangle dx = \frac{1}{\sqrt{d}} \int_{\partial B_0} \left\langle \frac{\nabla \log p_\alpha(x)}{\|\nabla \log p_\alpha(x)\|_2} \, dx, u_d(x) \right\rangle dx \quad (20)$$

Using the properties of $\tilde{x}_t|x_0$, which is uniformly distributed on $\partial B0$,

$$\frac{1}{\sqrt{d}} \int_{\partial B_0} \left\langle \frac{\nabla \log p_\alpha(x)}{\|\nabla \log p_\alpha(x)\|_2} \, dx, u_d(x) \right\rangle dx$$

$$= \frac{|\partial B_0|}{\sqrt{d}} E_{x \sim \tilde{x}_t | x_0} \left\langle \frac{\nabla \log p_\alpha(x)}{\|\nabla \log p_\alpha(x)\|_2}, u_d(x) \right\rangle \quad (21)$$

where $|\partial B0|$ denotes the volume of $\partial B0$. Tracing this back to $\kappa$ (Eq. (19)) results in,

$$\kappa(x_0) = -\frac{|\partial B_0|}{\sqrt{d}|B_0|} E_{x \sim \tilde{x}_t|x_0} \langle \frac{\nabla \log p_\alpha(x)}{\|\nabla \log p_\alpha(x)\|_2}, u_d(x) \rangle \quad (22)$$

Now, analyse the gradient term. Similarly using the properties of the uniform distribution $\tilde{x}|x_0$,

$$D(x_0) = \frac{1}{|\partial B_0|} \int_{\partial B0} \|\nabla \log p_\alpha(x)\|_2 \, dx = E_{x \sim \tilde{x}_t|x_0} \|\nabla \log p_\alpha(x)\|_2 \quad (23)$$

For convenience, plugging in $\|\nabla \log p_\alpha(x)\|_2 = \langle \frac{\nabla \log p_\alpha(x)}{\|\nabla \log p_\alpha(x)\|_2}, \nabla \log p_\alpha(x) \rangle$, results in

$$D(x_0) = E_{x \sim \tilde{x}_t|x_0} \langle \frac{\nabla \log p_\alpha(x)}{\|\nabla \log p_\alpha(x)\|_2}, \nabla \log p_\alpha(x) \rangle \quad (24)$$

Finally, any linear combination $a\kappa(x_0) + bD(x_0)$ may be obtained as

$$a\kappa(x_0) + bD(x_0)$$

$$= a \frac{-|\partial B_0|}{\sqrt{d}|B_0|} E_{x \sim \tilde{x}_t|x_0} \langle \frac{\nabla \log p_\alpha(x)}{\|\nabla \log p_\alpha(x)\|_2}, u_d(x) \rangle$$

$$+ b E_{x \sim \tilde{x}_t|x_0} \langle \frac{\nabla \log p_\alpha(x)}{\|\nabla \log p_\alpha(x)\|_2}, \nabla \log p_\alpha(x) \rangle =$$

$$E_{x \sim \tilde{x}_t|x_0} \langle \frac{\nabla \log p_\alpha(x)}{\|\nabla \log p_\alpha(x)\|_2}, a \frac{-|\partial B_0|}{\sqrt{d}|B_0|} u_d(x) + b\nabla \log p_\alpha(x) \rangle \quad (26)$$

Setting $b$ = -1, and tuning $\gamma = \frac{|\partial B_0|}{\sqrt{d}|B_0|}$, results in

$$-E_{x \sim \tilde{x}|x_0} \langle \frac{\nabla \log p_\alpha(x)}{\|\nabla \log p_\alpha(x)\|_2}, \gamma a u(x) - \nabla \log p_\alpha(x) \rangle = a\kappa(x_0) - D(x_0) \quad (27)$$

Where $a$ = 1 may be chosen.
Corollary 4. In the setting of statement 3, the following approximation may be made,

$$E_{x \sim \tilde{x}_t|x_0} \langle \frac{\nabla \log p_\alpha(x)}{\|\nabla \log p_\alpha(x)\|_2}, \frac{\sqrt{1-\alpha}}{\alpha} \hat{x}_0 \rangle$$

$$\approx E_{x \sim \tilde{x}_t|x_0} \langle \frac{\nabla \log p_\alpha(x)}{\|\nabla \log p_\alpha(x)\|_2}, \frac{1}{\sqrt{\alpha}} u_d(x) + \nabla \log p_\alpha(x) \rangle \quad (28)$$

Where the parameter a may be tuned s.t.

$$-E_{x \sim \tilde{x}_t|x_0} \langle \frac{\nabla \log p_\alpha(x)}{\|\nabla \log p_\alpha(x)\|_2}, \frac{\sqrt{1-\alpha}}{\alpha} \hat{x}_0 \rangle \approx a\kappa(x_0) - D(x_0) \quad (29)$$

Proof. By Eq. (11),

$$\sqrt{1-\alpha}\,E_{x\sim\tilde{x}|x_0}\,\langle\frac{\nabla\log p_\alpha(x)}{\|\nabla\log p_\alpha(x)\|_2},\hat{x}_0\rangle$$

$$\approx E_{x\sim\tilde{x}|x_0}\,\langle\frac{\nabla\log p_\alpha(x)}{\|\nabla\log p_\alpha(x)\|_2},\sqrt{1-\alpha}\,x_0+\sqrt{\alpha}\,u_d(x)$$

$$+\alpha\nabla\log p_\alpha(x)\rangle\quad(30)$$

Notice that,

$$E_{x\sim\tilde{x}|x_0}\,\langle\frac{\nabla\log p_\alpha(x)}{\|\nabla\log p_\alpha(x)\|_2},\sqrt{1-\alpha}\,\hat{x}_0\rangle=\langle E_{x\sim\tilde{x}|x_0}\left(\frac{\nabla\log p_\alpha(x)}{\|\nabla\log p_\alpha(x)\|_2}\right),\sqrt{1-\alpha}\,\hat{x}_0\rangle$$

$$=0\quad(31)$$

since integration of normals over the sphere is zero, and $\nabla\log p_\alpha(x)$ approximates the uniform spherical noise. Thus, by linearity of the expectation

$$E_{x\sim\tilde{x}|x_0}\,\langle\frac{\nabla\log p_\alpha(x)}{\|\nabla\log p_\alpha(x)\|_2},\sqrt{1-\alpha}\,x_0+\sqrt{\alpha}\,u_d(x)+\alpha\nabla\log p_\alpha(x)\rangle$$

$$=E_{x\sim\tilde{x}|x_0}\,\langle\frac{\nabla\log p_\alpha(x)}{\|\nabla\log p_\alpha(x)\|_2},\sqrt{\alpha}\,u_d(x)+\alpha\nabla\log p_\alpha(x)\rangle\quad(32)$$

Tracing back to Eq. (30) and dividing by $\alpha$,

$$\frac{\sqrt{1-\alpha}}{\alpha}E_{x\sim\tilde{x}_t|x_0}\,\langle\frac{\nabla\log p_\alpha(x)}{\|\nabla\log p_\alpha(x)\|_2},\hat{x}_0\rangle$$

$$\approx E_{x\sim\tilde{x}_t|x_0}\,\langle\frac{\nabla\log p_\alpha(x)}{\|\nabla\log p_\alpha(x)\|_2},\frac{1}{\sqrt{\alpha_t}}u_d(x)+\nabla\log p_\alpha(x)\rangle\quad(33)$$

Finally, similarly to Eqs. (25), (27), setting $a=\frac{1}{\sqrt{\alpha}\gamma}$, results with

$$\frac{\sqrt{1-\alpha}}{\alpha}E_{x\sim\tilde{x}_t|x_0}\,\langle\frac{\nabla\log p_\alpha(x)}{\|\nabla\log p_\alpha(x)\|_2},\hat{x}_0\rangle\approx a\kappa(x_0)-D(x_0)\quad(34)$$

**Figure 10** shows exemplary method choices and analysis for an implementation of the detection method. In particular, the Figure shows (a) Kernel Density Estimation (KDE) of the inventors' criterion comparing usage of latent space of stable diffusion models to CLIP embeddings - which shows enhanced separability. (b) Determining a decision threshold using the mean and standard deviation of real image embeddings (while avoiding contamination of generated data). (c) The impact of increasing dimensionality d on the concentration of $\varepsilon$ around the sphere $S^{d-1}(\sqrt{d})$ ($\|\varepsilon\|$ round $\sqrt{d}$). This demonstrates interchangeable use of $x_t$ and $\tilde{x}$ in high-dimensional space.

Criterion Practical Choices and Best Practices

Given $x_0$, the criterion $a\kappa(x_0)-D(x_0)$ may be approximated as expressed in Corollary 2. For the expectation approximation, the inventors drew s spherical perturbations to produce samples $\{\tilde{x}^{(i)}\}_{i=1}^{s}$ according to Eq. (10), and approximated their corresponding score functions using the selected diffusion model as in Eq. (11), producing

$\left\{h\left(\tilde{x}^{(i)}\right)\right\}_{i=1}^{s}$ . Taking the average results in,

$$C(x_0) := \frac{\sqrt{1-\alpha}}{\alpha}\frac{1}{s}\sum_{i=1}^{s}\langle\frac{-h\left(\tilde{x}^{(i)}\right)}{\left\|h\left(\tilde{x}^{(i)}\right)\right\|_2}, x_0\rangle \approx a\kappa(x_0) - D(x_0)$$

Where $\frac{\sqrt{1-\alpha}}{\alpha}$ may be left out. To establish a similarity decision threshold (which may otherwise be referred to as a "real or generated decision threshold", the inventors calibrated the model using a set of real x0 samples. Observing the histogram of the criterion on this, noting that it resembles a Gaussian, a threshold of: Empirical mean plus one-standard-deviation was decided - as shown in Figure 10. $x_0$ may be classified as generated if $C(x_0)$ exceeds this threshold, and as real otherwise.

As a take-away from the above mathematical results, $\frac{-h\left(\tilde{x}^{(i)}\right)}{\left\|h\left(\tilde{x}^{(i)}\right)\right\|_2}$ amounts to (normalized) noise prediction (Eq. (3)), i.e. the inventors measure similarity between the predictions of noise and data, which is not that intuitive. This is a result of the mathematical derivations and is supported hereafter by thorough evidence. As described above, the denoising model used by the inventors was a diffusion model. In particular, the inventors implemented their approach within the Stable Diffusion *Rombach et al. [2022]* setting. The data manifold, score function, reverse diffusion and all related operations were in a latent space $\mathcal{Z}$ . Denote the lower-dimensional latent representation $z_0 = E(x_0) \in \mathcal{Z}$ (The typical $512 \times 512 \times 3$ $x_0$, is mapped to $z_0$ of $64 \times 64 \times 4$, i.e. the flattened dimension is $d_z = 16,384$) where E : $\mathcal{Z} \rightarrow \Omega$ is the VQ-VAE encoder coupled with a decoder G : $\mathcal{Z} \rightarrow \Omega$. Since the latent space encapsulates the essential features of the data in a lower-dimensional representation, it also functions as an embedding.

The inventors mapped from the latent embedding to CLIP embeddings *Radford et al. [2021]* and observed a substantial increase in performance. This mapping involves decoding from the latent representation back to the image space and encoding using the CLIP image embedder. Of course, other embedding may be used. Intuitively, mapping the score function and signal from the latent space to CLIP embeddings leverages the richer semantic understanding provided by CLIP embeddings, as shown in Figure 10.

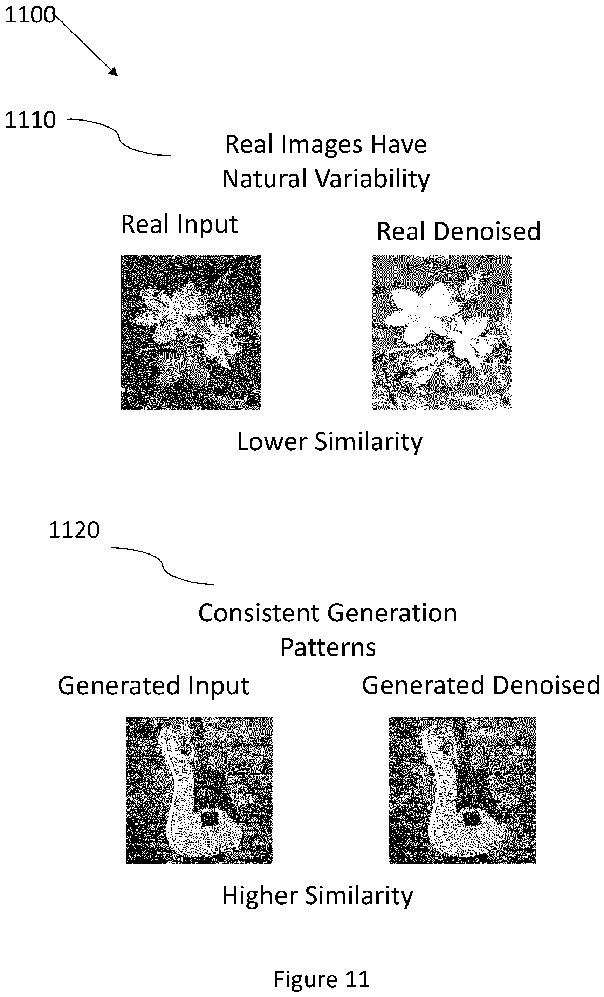

**Figure** 11 shows a visual comparison 1100 between a denoised generated image 1120 and a denoised real image 1110. The denoised images may be output from the denoising method described in relation to for example Figure 3 above. The solution developed by the inventors may be based on the inherent differences in the generation and noise patterns of generated images compared to real images, and in particular:

Consistent Generation Patterns: A first characteristic is that generated images are the result of noise optimization. That is, it may be assumed that known and yet to be developed methods of image generation rely on some kind of noises optimization to generate images. Generated images, especially those created by stable diffusion models, tend to have consistent patterns in their embeddings. When these images are denoised, the underlying generation patterns may still be present, leading to a high similarity between the original and denoised embeddings.

A second characteristic of generated images is that the generated images are created to best illustrate the generation prompt. That is, text-to-image models are developed to generate images based on an input description. The models are optimized to generate images which most closely resemble the input description.

Real Images Have Natural Variability: Real images, on the other hand, contain natural and diverse noise and texture. When a real image is denoised, this natural variability often leads to a lower similarity between the original and denoised embeddings, as the denoising process may alter these natural characteristics.

Model's Internal Representations: The embeddings (internal representations) captured by the model for generated images tend to reflect the synthetic process. The inventors found that the denoising process does not significantly change these synthetic artifacts, resulting in high similarity. For real images, the denoising process smooths out natural variability, leading to a different internal representation and hence lower similarity.

Thus, when comparing the input image with the denoised output image, since most/all the irrelevant "noise" was already removed in the generation process, if the input is a generated image the similarity between the two embedding vectors would be expected to be higher than if the input image is a real image. As shown in Figure 11, with a real input 1110, the input image and denoised image may have a lower similarity than the fake, computer generated input 1120. The similarity may be based on, for example, a cosine similarity of embeddings of the real image and fake image.

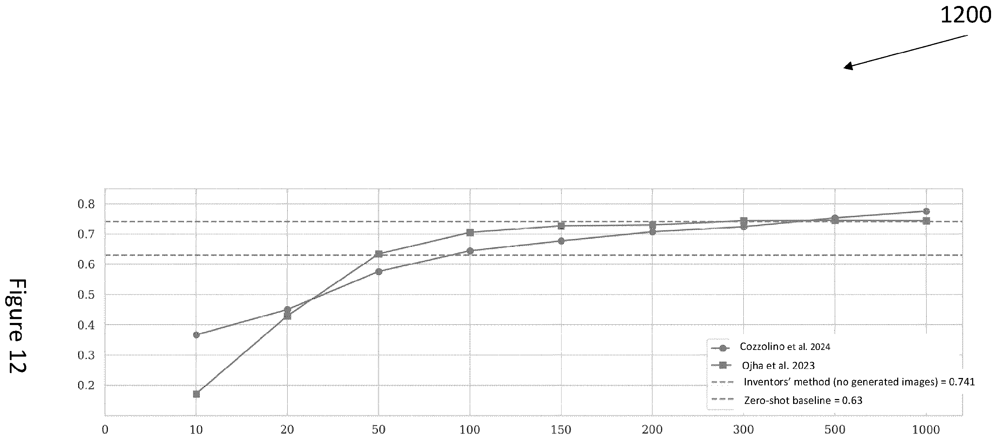

**Figure 12** shows a sample dependency evaluation 1200 comparing the method disclosed herein with known methods. Without using generated samples, the inventors approach surpasses the baseline as well as the state-of-the-art methods in restricted data scenarios. When known methods are permitted 10-50 generated samples, the inventor's method significantly outperforms the known methods F1-scores by 0.35 to 0.2. Even when the known methods are allowed 500 - 1000 generated samples, the inventors method remains competitive.

Evaluation

The inventors evaluated the advantages of their zero-shot framework, which may uniquely avoid the reliance on generated image datasets (which may become outdated). The inventors focused on two aspects in the evaluation:

1) Sample dependency: Evaluating against the known methods efficacy under the constraints of limited- sized datasets of generated images, simulating the need for rapid adaptability to new technologies. 2) technique dependency: Generalization across a variety of unseen generative techniques, simulating scenarios involving novel out-of-data generations. Accordingly, the inventors compared against benchmarks and methods designed for these aspects.

Experimental Settings

Datasets. To ensure a diverse representation of the generative techniques, the method disclosed herein was evaluated using three benchmark datasets within the domain of generated image detection. The CNNSpot (S.-Y. Wang, O. Wang, R. Zhang, A. Owens, and A. A. Efros. Cnn-generated images are surprisingly easy to spot... for now. In Proceedings of the IEEE/CVF conference on computer vision and pattern recognition, pages 8695-8704, 2020.) dataset consists of real and generated images from 20 categories of the LSUN (F. Yu, A. Seff, Y. Zhang, S. Song, T. Funkhouser, and J. Xiao. Lsun: Construction of a large-scale image dataset using deep learning with humans in the loop. arXiv preprint arXiv:1506.03365, 2015) dataset. The generated images were created by over ten generative models, predominantly GANs. The Universal Fake Detect (U. Ojha, Y. Li, and Y. J. Lee. Towards universal fake image detectors that generalize across generative models. In Proceedings of the IEEE/CVF Conference on Computer Vision and Pattern Recognition, pages 24480-24489, 2023) dataset extends CNNSpot with generated images from newer models, primarily diffusion models. The GenImage Zhu et al. [2023] dataset, a more recent addition, includes images generated by commercial tools such as Midjourney. In total, the aggregated dataset contains more than twenty generation techniques, from open-source GANs and diffusion models, as well as commercial tools, including widely used models such as Stable Diffusion and Dall-E, and others Karras et al. [2017], Zhu et al. [2017], Karras et al. [2019], Dhariwal and Nichol [2021], Ramesh et al. [2021], Rombach et al. [2022], Midjourney [2024]. The complete list of generative models used in the evaluation is provided below:
In the evaluation, the inventors extracted a subset from each dataset, containing real images and fake images generated from the following generative models: ProGAN Karras et al. [2017], StyleGAN Karras et al. [2019], BigGAN Brock et al. [2018], GauGAN Park et al. [2019], CycleGAN Zhu et al. [2017], StarGAN Choi et al. [2018], Cascaded Refinement Networks (CRN) Chen and Koltun [2017], Implicit Maximum Likelihood Estimation (IMLE) Li et al. [2019], SAN Dai et al. [2019], seeing-dark Chen et al. [2018], deepfake Rossler et al. [2019], Midjourney Midjourney [2024], Stable Diffusion V1.4 Rombach et al. [2022], Stable Diffusion V1.5 Rombach et al. [2022], ADM Dhariwal and Nichol [2021], Wukong MindSpore [2024], VQDM Gu et al. [2022], LDM Rombach et al. [2022] and Glide Nichol et al. [2021].
In the technique dependency experiment the inventors divided their dataset into three groups: images generated by GANs (produces by ProGAN, StyleGAN, BigGAN, GauGAN, CycleGAN,CRN, IMLE and SAN models), diffusion models (produces by LDM 100, LDM 200, Glide and Guided diffusion models), and commercial tools (produces by Midjourney,Stable Diffusion V1.4, Stable Diffusion V1.5, Wukong, VQDM and DALL-E tools).

Methods for Comparison.

The inventors benchmarked the method disclosed herein against two leading image detection methods Ojha et al. [2023], Cozzolino et al. [2024] (D. Cozzolino, G. Poggi, R. Corvi, M. Nieβner, and L. Verdoliva. Raising the bar of ai-generated image detection with clip. In Proceedings of the IEEE/CVF Conference on Computer Vision and Pattern Recognition, pages 4356-4366, 2024.) These state-of-the-art methods are designed to enhance generalization in detecting images created by unseen generative techniques, making them relevant for comparison with the inventors zero-shot approach. For the evaluation, the specifications in the SOTA methods respective papers were closely followed (the inventors found that the result in the papers were replicable), while extending the evaluation to additional datasets.
Comparing a zero-shot method, which does not rely on generated datasets, with supervised methods may introduce inherent biases. To address this, the inventors also compared their method with a zero-shot baseline using the same settings. This Baseline consisted of Auto-encoding CLIP embeddings of real images, and employing reconstruction error as their generated/real criterion.
The technical details of the known methods as well as baseline implementation is as follows. As described above, the inventors benchmarked their method against two leading image detection methods Ojha et al. [2023], and Cozzolino et al. [2024]. These state-of-the-art methods are designed to enhance generalization in detecting images created by unseen generative techniques, making them relevant for comparison with the zero-shot approach described herein. The implementations closely follow the specifications outlined in their respective publications. Specifically, the detection models are trained on images generated by a single model (ProGAN Karras et al. [2017] from the CNNSpot Wang et al. [2020] dataset) and tested on images from various other models. The inventors report results for detecting additional generative techniques (extending the results of the original papers), to better understand the generalization interplay. For the implementation of the Ojha et al. [2023] method, the inventors applied a KNN model with k = 9 and cosine similarity, as reported, to yield the best results. In the implementation of Cozzolino et al. [2024] method, a standard SVM model, Pedregosa et al. [2011], was used. As above, comparing a zero-shot method, which does not rely on generated datasets, with supervised methods can introduce inherent biases. To address this, the inventors also compared their method with a zero-shot baseline using the same settings. This baseline was implemented as an auto-encoder which received CLIP embeddings of real images only. The inventors found that by learning to reconstruct only real embeddings, the auto-encoder will 'struggle' with fake ones, resulting in higher reconstruction errors.

The autoencoder architecture featured an encoder and a decoder, each comprising five fully connected layers activated by ReLU functions. The embedding layer size was set to 512. The inventors trained the autoencoder over 500 epochs with a batch size of 62, utilizing the mean square error (MSE) loss function and a learning rate of 0.0001. The CLIP embeddings were obtained using the open-source "clip-vit-large-patch14" model. Training was conducted with 10 different seeds (1, 5, 9, 16, 17, 24, 43, 54, 59, 65), and the final detection results were averaged to ensure robustness.

Implementation Details.

In an exemplary example for implementing the inventors' method, the following implementation was used. The denoising model was a diffusion model and in particular the Stable Diffusion 1.4 model. For the text captions (given as an input in Stable Diffusion 1.4), the inventors used an image-to-text model LLaVA 1.5 Liu et al. [2023]. For the criterion 3 hyper-parameters were set: 1.) No. of spherical noises s = 64, 2.) Perturbation strength $\sqrt{1 - \alpha} = 0.8942$, which determines the radii of $B_0$ given by $r_{B0} = \sqrt{\alpha d}$, 3.) a (small) scalar was added to the criterion denominator to ensure it is strictly positive, in this example $\delta = 10\text{-}8$.

Test Cases and Metrics

The evaluation aimed to demonstrate that an exemplary implementation of the inventors' method disclosed herein, using zero-shot image detection, may effectively generalize to detect images generated by new, unseen techniques without exposure to any generated images nor training. For the evaluation, the inventors conducted two main experiments on sample dependency, and technique dependency.

Sample dependency experiment. In this evaluation, both the inventors' (zero-shot) method and the supervised comparison methods received equal amounts of exposure to pre-test data. While all methods were exposed to real images, the supervised methods were gradually exposed to an increasing number of generated images, ranging from 10 to 500 ProGAN-generated images.

The total number of training samples were always summed to 1K; (e.g. 500 generated images paired with 500 real images). During test time, both the inventors' method and the comparison methods were evaluated on a balanced test set consisting of 16K images, equally divided between real and generated images, encompassing all generative techniques mentioned above. The F1 score was used as the evaluation metric, as it balances the importance of precision and recall by considering both false positives and false negatives. This balance makes it a suitable metric for assessing the detector's ability to generalize to new generative techniques.

Figure 12 presents the sample dependency evaluation results. The plot shows the average F1 scores across different seeds for varying amounts of generated data exposure in the training set. A key take-away from the evaluation was that the SOTA detectors require training over approximately 250 generated samples to achieve similar performance to the method disclosed herein. Considering the rapid evolution of generative techniques, it is anticipated that this performance gap will continue to widen.

Table 1 shows the results for the sample dependency evaluation. In particular, Table 1 shows F1 scores for different detectors and sample sizes.

| Method | Number of Generated Samples | Recall Fake (TPR) | Precision Real (FPR) | Accuracy | F1 Score |
|---|---|---|---|---|---|
| 8*Cozzolino et al. 2024 | 10 | 0.229 | 0.566 | 0.614 | 0.366 |

(continued)

| Method | Number of Generated Samples | Recall Fake (TPR) | Precision Real (FPR) | Accuracy | F1 Score |
|---|---|---|---|---|---|
| | 20 | 0.294 | 0.587 | 0.646 | 0.45 |
| | 50 | 0.41 | 0.629 | 0.702 | 0.576 |
| | 100 | 0.484 | 0.658 | 0.735 | 0.644 |
| | 200 | 0.561 | 0.691 | 0.768 | 0.707 |
| | 300 | 0.582 | 0.701 | 0.779 | 0.724 |
| | 500 | 0.624 | 0.721 | 0.796 | 0.753 |
| | 1000 | 0.655 | 0.738 | 0.811 | 0.775 |
| 8*Ojha et al. 2023 | 10 | 0.107 | 0.531 | 0.554 | 0.171 |
| | 20 | 0.292 | 0.586 | 0.639 | 0.429 |
| | 50 | 0.498 | 0.655 | 0.719 | 0.634 |
| | 100 | 0.622 | 0.7 | 0.744 | 0.705 |
| | 200 | 0.698 | 0.726 | 0.744 | 0.73 |
| | 300 | 0.736 | 0.744 | 0.748 | 0.744 |
| | 500 | 0.744 | 0.746 | 0.747 | 0.745 |
| | 1000 | 0.722 | 0.73 | 0.752 | 0.744 |
| Method disclosed herein | 0 | 0.75 | 0.723 | 0.737 | 0.738 |

Technique dependency experiment

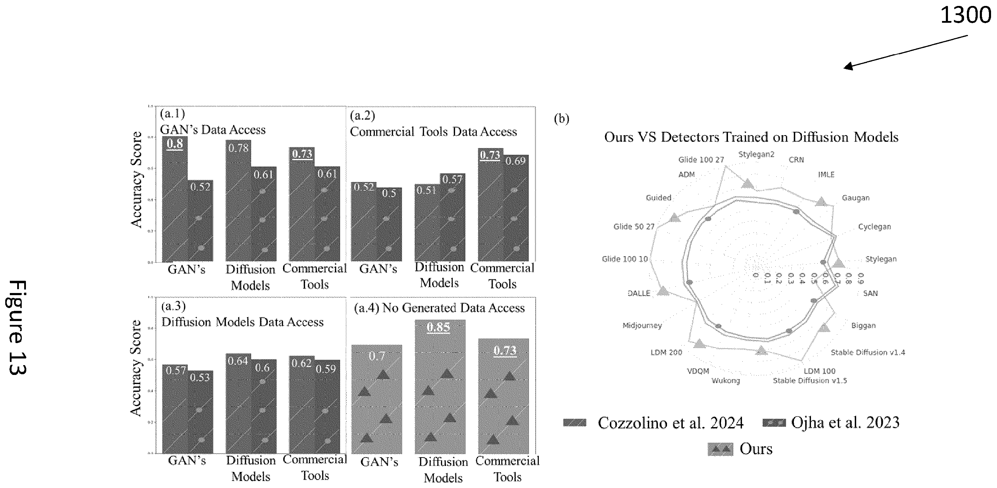

The second evaluation method was a technique dependency experiment. This evaluation examined how the generative technique used during training influences the detector's ability to generalize to new, unseen techniques. To accomplish this, the inventors divided the dataset into three groups: images generated by GANs, diffusion models, and commercial tools. Next, each supervised known method was trained using a balanced training set consisting of 500 real images and 500 images from a specific generative group. As determined from previous experiments, this quantity is sufficient to achieve reasonable performance. Conversely, the inventor's method was exposed to exclusively real 1K images. The performance was tested on the same 16K test set from the previous experiment, using accuracy as the evaluation metric due to balanced sets. The results of the second evaluation are shown in Figure 13.

**Figure 13** shows a technique dependency experiment performed by the inventors to evaluate the method disclosed herein. Plots a.1-a.3 present the performance of supervised known methods trained on images generated by GANs, commercial tools, and diffusion models respectively, while plot a.4 showcases the performance of the inventors' method.

Plot b is presented as a polar plot and focuses on diffusion models, and presents a comparison between the inventor's method, that is exposed to such a model by design, and the known methods, when they are trained over diffusion models generated images. Notably, in the diffusion-exposure regime, (a.3, a.4, b), the inventors' method out-performed the known methods in generalizability as well as accuracy across a diverse set of generative techniques.

An additional finding from the evaluation was that as the disparity between generative techniques increased, the model's ability to generalize decreased. For example, see the plot a.2 where commercial tools exposure exhibits reduced accuracy on GANs.

Tables 2- 4 shows the results for the technique dependency evaluation.

Table 2: Accuracy comparison for detectors exposed to generated images by GAN's

| Method | Trained on | Stylegan 2 | CR N | IML E | Gaugan | Cyclegan | Stylegan | SAN | Biggan |
|---|---|---|---|---|---|---|---|---|---|
| 3*Cozzolino et al. 2024 | GAN's | 0.729 | 0.68 4 | 0.833 | | 0.940 | 0.772 | 0.59 2 | 0.895 |

(continued)

| Method | Trained on | Stylegan 2 | CR N | IML E | Gauga n | Cyclegan | Stylega n | SAN | Bigga n |
|---|---|---|---|---|---|---|---|---|---|
| | Diffusion model | 0.599 | 0.59 6 | 0.623 | 0.627 | 0.733 | 0.609 | 0.71 7 | 0.601 |
| | Commerci al Tools | 0.533 | 0.29 9 | 0.325 | 0.423 | 0.679 | 0.478 | 0.60 3 | 0.607 |
| 3*Ojha et al. 2023 | GAN's | 0.491 | 0.58 2 | 0.599 | 0.604 | 0.720 | 0.480 | 0.70 0 | 0606 |
| | Diffusion model | 0.557 | 0.56 7 | 0.590 | 0.594 | 0.713 | 0.572 | 0.69 0 | 0.579 |
| | Commerci al Tools | 0.507 | 0.20 9 | 0.253 | 0.542 | 0.784 | 0.416 | 0.61 9 | 0.630 |
| Method disclosed herein | Real Images Only | 0.652 | 0.71 6 | 0.712 | 0.841 | 0.685 | 0.707 | 0.50 8 | 0.771 |

Table 3: Accuracy comparison for detectors exposed to generated images by diffusion models

| Method | Trained on | LDM 100 | LDM 200 | Glide 100 10 | Glide 50 27 | Guided | Glide 100 27 | ADM |
|---|---|---|---|---|---|---|---|---|
| 3*Cozzolino et al. 2024 | GAN's | 0.839 | 0.819 | 0.742 | 0.769 | 0.740 | 0.754 | 0.816 |
| | Diffusion model | 0.639 | 0.646 | 0.641 | 0.635 | 0.631 | 0.632 | 0.644 |
| | Commercial Tools | 0.405 | 0.409 | 0.529 | 0.533 | 0.612 | 0.533 | 0.795 |
| 3*Ojha et al. 2023 | GAN's | 0.614 | 0.620 | 0.610 | 0.611 | 0.609 | 0.612 | 0.610 |
| | Diffusion model | 0.607 | 0.609 | 0.602 | 0.604 | 0.602 | 0.601 | 0.591 |
| | Commercial Tools | 0.563 | 0.554 | 0.555 | 0.549 | 0.629 | 0.580 | 0.719 |
| Method disclosed herein | Real Images Only | 0.886 | 0.859 | 0.918 | 0.921 | 0.763 | 0.907 | 0.6395 |

Table 4: Accuracy comparison for detectors exposed to generated images by Commercial tools

| Method | Trained on | Midjourne y | DAL LE | Stable Diffusi on v4 | Stable Diffusion v5 | Wuko ng | VDQM |
|---|---|---|---|---|---|---|---|
| 3*Cozzolino et al. 2024 | GAN's | 0.549 | 0.82 7 | 0.774 | 0.796 | 0.731 | 0.904 |
| | Diffusion model | 0.589 | 0.63 9 | | 0.639 | 0.625 | 0.641 |
| | Commercial Tools | 0.799 | 0.46 6 | 0.804 | 0.793 | 0.807 | 0.785 |
| 3*Ojha et al. 2023 | GAN's | 0.600 | 0.61 7 | 0.604 | 0.622 | 0.620 | 0.618 |
| | Diffusion model | 0.569 | 0.60 6 | 0.600 | 0.616 | 0.602 | 0.609 |
| | Commercial Tools | 0.716 | 0.59 7 | 0.721 | 0.716 | 0.705 | 0.721 |
| Method disclosed herein | Real Images Only | 0.593 | 0.83 8 | 0.764 | 0.728 | 0.704 | 0.7659 |

Further evaluation of the inventors' method related to complexity and potential limitations.

Complexity considerations.

The inventors' approach may use inference on multiple spherical perturbations, which could be performed in a single batch - using an appropriate GPU (the inventors used a single A100 GPU). Known methods appear to share a computational bottleneck: the CLIP embedder. The inventors' method may employ such an embedder sequentially with an additional heavy model (stable diffusion 1.4) - making it more computationally intensive.

Potential Limitations. A primary advantage of the inventors' method is its independence from the generated data. However, the method may rely on access to a diffusion model and may introduce some level of bias toward detecting images generated by such models, as shown in Figure 13. However, in this case the inventors found that their method demonstrates comparable generalizability to SOTA supervised methods.

The inventors also compared the run-time of their method with known methods, a shown in Table 5.

Table 5: Run time of known methods and the inventors' method

| Method | Train (calibration) Runtime | Inference Runtime |
|---|---|---|
| by Cozzolino et al., 2023 | Clip embedding + classifier training - 12 hours | milliseconds |
| Method disclosed herein | Denoising calibration - 12 hours | milliseconds |

The method described herein may use a zero-shot framework for detecting AI-generated images by leveraging the implicit manifolds learned by pre-trained diffusion models. The method may combine score function analysis and non-Euclidean manifold geometry to distinguish between real and generated images without the need for additional training on labeled datasets. This approach addresses the limitations of existing methods, which often rely on extensive datasets of generated images that quickly become outdated due to rapid advancements in generative technologies.

The empirical results disclosed herein demonstrate that an implementation of the inventors' method achieves competitive performance, often outperforming state-of-the-art supervised methods, especially in scenarios with limited access to generated images. Further, the method disclosed herein generalizes well across different generative techniques, highlighting its practical potential in maintaining effective digital authenticity with high longevity.

Furthermore, the method described herein may advance the theoretical understanding of manifold discrepancies between real and generated images.

The inventors' findings indicate that pre-trained models and their implicit manifolds can be a powerful approach to addressing the challenges posed by AI-generated content, paving the way for more resilient and adaptable detection frameworks.

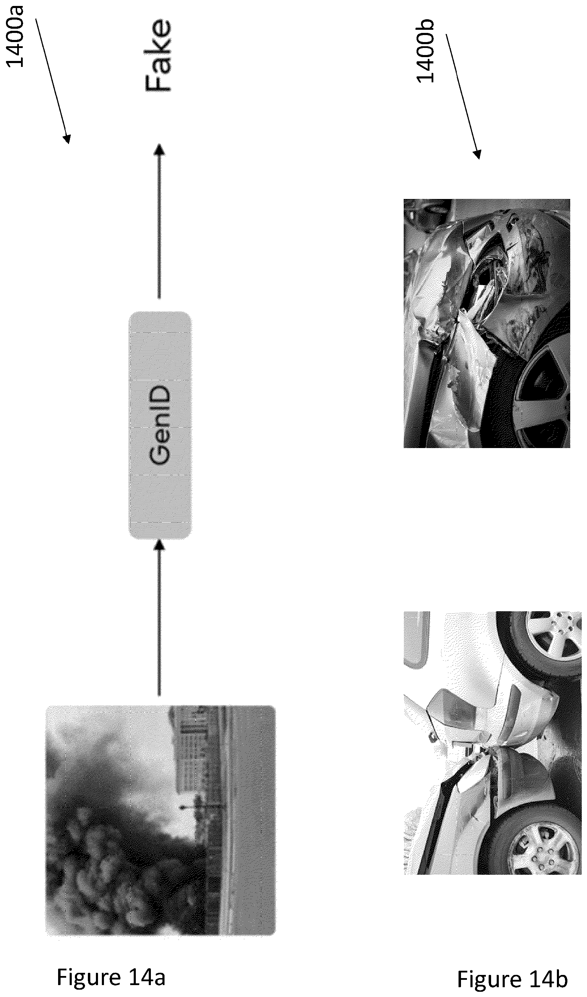

**Figures 14a and 14b** show example use cases for the methods described herein.

Figure 14a shows a computer-generated image which may be used to spread misinformation, for example on social media and/or by news outlets. The methods described herein may be used to serve as an image disinformation detection tool in various domains and support anti-disinformation efforts.

Figure 14b shows an example of computer-generated images which may be used for insurance claims. Generated images may be fraudulently used for an insurance claim. Thus, detecting fake images may be used for fraud prevention. Thus, the method disclosed herein may be used as an image detection tool to differentiate between real and AI-generated images of car damage.

Further implementation of the method described herein may be social media fake image detection, News and media verification, political election integrity and forensic authentication. Of course, the method may be used for other image detection purposes. The detector may serve as a reliable disinformation detection tool across various domains, especially in areas lacking existing generated images. **Figure 15** shows an autoencoder model 1500 which may be combined with the detector model described herein. The autoencoder model may perform detection according to an autoencoder reconstruction error.

An input image 1510 may be input into the model. It may be unknown whether the input image is a real image of a fake image.

The input image may be received by a CLIP image encoder 1520. The input image may be converted to a CLIP embedding 1525 by the CLIP image encoder. The CLIP embedding may have the dimension 768. While the inventors used the CLIP image encoder, of course, any suitable image encoder may be used. Of course, the embedding generated by the image encoder may depend on the image encoder used.

The CLIP embedding may be input into a pretrained image autoencoder, denoted as real image autoencoder 1530 in the figure. The autoencoder may be a type of neural network which is trained to replicate an input as the output. The autoencoder may be an unsupervised feedforward neural network. That is, the autoencoder may not require labels for learning.

The autoencoder may comprise two fully connected feedforward layers/neural networks. Firstly, the autoencoder may comprise an encoder. The encoder may compress the input embedding to remove any form of noise and generate a latent space/bottleneck. The output dimension of the encoder may be smaller than the input embedding. For example, the encoder may reduce the embedding into a 64x64x4 vector. Of course, other embedding sizes may be used. For example, in practice an embedding size of 512x1 may be used.

The autoencoder may also comprise a decoder. The decoder may take the latent vector and attempt to reconstruct, with as much fidelity as possible, the original input data (the architecture of this neural network is, therefore, generally a mirror image of the encoder). The decoder may therefore generate a reconstruction embedding, denoted as CLIP reconstruction 1540, of the input CLIP embedding.

The inventors trained the autoencoder using only real images. The autoencoder method for detecting computer generated images may therefore be referred to as a zero-shot method for detecting computer generated images.

A reconstruction error may be determined between the input CLIP embedding and output CLIP reconstruction embedding, using, for instance, a loss function. In this example, the inventors used a mean square error (MSE) loss as the loss function. The reconstruction error may be compared with a decision threshold. The decision threshold may be based on a mean reconstruction error of the autoencoder training set. That is, an MSE loss may be determined for each training image used to train the autoencoder, and a mean of the MSE for each training image may be used as the decision threshold.

The method may output of real or fake 1560 decision based on the comparison of the reconstruction error with the decision threshold. For instance, if the reconstruction error is above the decision threshold, the image may be considered a fake image. If the reconstruction error is below the decision threshold, the image may be considered a real image.

As the autoencoder may be trained on only real images, if the input image is real it would be expected that the MSE loss after passing through the autoencoder would be relatively small (e.g., below the decision threshold). However, if a fake image is input, the fake image may have hidden, latent features, which are not detected by the human eye but are detected by the autoencoder. Hence, the error in the MSE may be high.

The input image may subsequently be input into the denoising model, and the method described herein may be performed. The denoising model may be used for verification. For instance, if the autoencoder model determines that the image is a computer-generated image, the image may then be input into the denoising model. If the denoising model agrees that the image is computer-generated, the final output may be that the image is computer generated. If the denoising model determined that the image is real, the denoising model may override the original decision and the output may be that the image is real.

In this example, the setup and configuration of the autoencoder model and the denoising model may be as follows:

Autoencoder training settings: Batch size - 64; Epoch number - 500; Optimizer - Adam; Learning rate - 1e-4; Reconstruction error metric - MSE Loss.

Final properties: Autoencoder training final loss - 0.00068; Decision threshold - 0.00016

Denoising model properties: Image-to-text model - nlpconnect/vit-gpt2-image-captioning. Denoising pipeline: Text tokenizer - CompVis/stable-diffusion-v1-4; Text encoder - CompVis/stable-diffusion-v1-4; UNet model - CompVis/-stable-diffusion-v1-4; Image decoder (VAE) - CompVis/stable-diffusion-v1-4; CLIP image encoder - openai/clip-vit-large-patch14; Decision threshold - 0.7196.

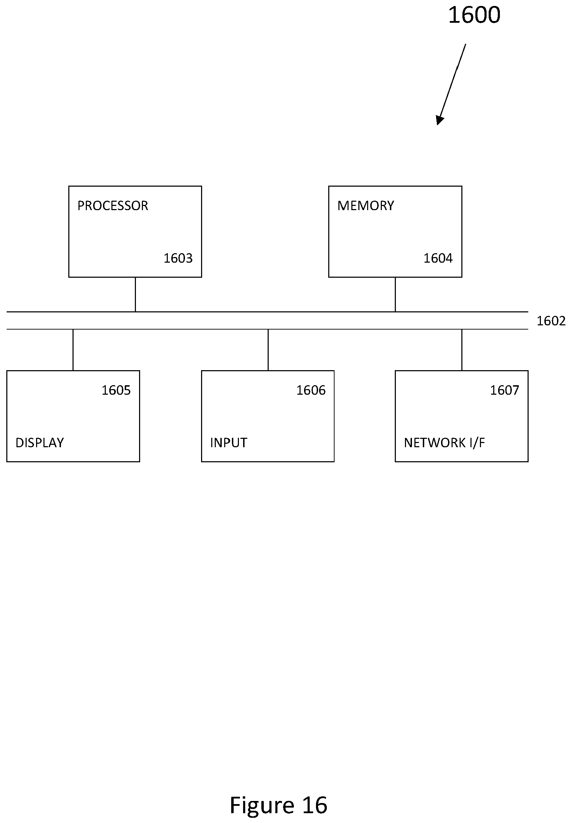

**Figure 16** is a block diagram of an information processing apparatus 1600 or a computing device 1600, such as a data storage server, which embodies the present invention, and which may be used to implement some or all of the operations of a method embodying the present invention, and perform some or all of the tasks of apparatus of an embodiment. The computing device 1600 may be used to implement any of the method steps described above, e.g. any of steps S10-S50. It may be used to provide any or all of the software blocks/ modules described herein (for instance a "CLIP image encoder" block or "image-to-text model" module).

The computing device 1600 comprises a processor 1603 and memory 1604. Optionally, the computing device also includes a network interface 1607 for communication with other such computing devices, for example with other computing devices of invention embodiments. Optionally, the computing device also includes one or more input mechanisms such as keyboard and mouse 1606, and a display unit such as one or more monitors 1605. These elements may facilitate user interaction. The components are connectable to one another via a bus 1602.

The memory 1604 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, for example any of steps S10-S50. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 1603 is configured to control the computing device and execute processing operations, for example executing computer program code stored in the memory 1604 to implement any of the method steps described herein. The memory 1604 stores data being read and written by the processor 1603 and may store at least one denoising model (such as a pretrained diffusion model) and/or image encoder and/or image-to-text model and/or other data, described above, and/or programs for executing any of the method steps described above. These entities may be in the form of code blocks which are called when required and executed in a processor.

As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 1603 may be considered to comprise any of the units described above. Any operations described as being implemented by a unit may be implemented as a method by a computer and e.g. by the processor 1603.

The display unit 1605 may display a representation of data stored and/or generated by the computing device, such as a generated image and/or GUI windows and/or a determined result of an input image (real or computer generated), and may also display a cursor and dialog boxes and screens enabling interaction between a user and the programs and data stored on the computing device. The input mechanisms 1606 may enable a user to input data, such as the input image, and instructions to the computing device. For example, the GUI may provide an option to upload an image and may display the determination of the detection model.

The network interface (network I/F) 1607 may be connected to a network, such as the Internet, and is connectable to other such computing devices via the network. The network I/F 1607 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 1600 such as that illustrated in Figure 16. Such a computing device need not have every component illustrated in Figure 16, and may be composed of a subset of those components. For example, the apparatus 1600 may comprise the processor 1603 and the memory 1604 connected to the processor 1603. Or the apparatus 1600 may comprise the processor 1603, the memory 1604 connected to the processor 1603, and the display 1605. A method embodying the present invention may be carried out by a single computing device in communication with one or more data storage servers via a network. The computing device may be a data storage itself storing at least a portion of the data.

Thus, according to an aspect there is provided a computer program which, when run on a computer, causes the computer to carry out a method comprising: loading an input image; inputting the input image and a representation describing the input image into a denoising model for denoising the input image using the representation; generating a denoised image embedding from the denoised image; generating an input image embedding from the input image; comparing a difference between the input image embedding and the denoised image embedding with a similarity decision threshold to determine whether the input image is a real image or a computer generated image.

To implement the methods described herein, the inventors used the Ubuntu 20.04 Linux operating system, equipped with a Standard NC48ads A100 v4 configuration, featuring 4 virtual GPUs and 440 GB of memory. The code for implementing the method described herein was developed in Python 3.8.2, utilizing PyTorch 2.1.2 and the NumPy 1.26.3 package for computational tasks.

A method embodying the present invention may be carried out by a plurality of computing devices operating in cooperation with one another. One or more of the plurality of computing devices may be a data storage server storing at least a portion of the data. For example, the diffusion model may be stored on a separate server from other units.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules. The computer program may be stored on a computer-readable medium. The computer-readable medium may be non-transitory.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random-access memory or both. The essential elements of a computer are a processor for executing instructions coupled to one or more memory devices for storing instructions and data.

Thus, according to another aspect, there is provided an information processing apparatus for detecting computer generated images comprising a memory and a processor connected to the memory, wherein the processor is configured to: load an input image; input the input image and a representation describing the input image into a denoising model for denoising the input image using the representation; generate a denoised image embedding from the denoised image; generate an input image embedding from the input image; compare a difference between the input image embedding and the denoised image embedding with a similarity decision threshold to determine whether the input image is a real image or a computer generated image.

According to another aspect there is a computer program which, when executed by a companion device, causes the companion device to execute a method of an embodiment. The computer program may be stored on a computer-readable medium. The computer-readable medium may be non-transitory.

The above-described embodiments of the present invention may advantageously be used independently of any other of the examples/embodiments or in any feasible combination with one or more others of the embodiments.

The invention is described in terms of particular examples. Other examples are within the scope of the following claims. For example, the steps of the invention may be performed in a different order and still achieve desirable results.

The skilled person will appreciate that except where mutually exclusive, a feature described in relation to any one of the above aspects may be applied mutatis mutandis to any other aspect. Furthermore, except where mutually exclusive, any feature described herein may be applied to any aspect and/or combined with any other feature described herein.

## Claims

1. A computer implemented method for detecting computer generated images comprising:

   loading an input image;
   inputting the input image and a representation describing the input image into a denoising model for denoising the input image using the representation;
   generating a denoised image embedding from the denoised image;
   generating an input image embedding from the input image;
   comparing a difference between the input image embedding and the denoised image embedding with a similarity decision threshold to determine whether the input image is a real image or a computer-generated image.

2. The method according to claim 1, wherein the input image is denoised by the denoising model in a single iteration denoising step.

3. The method according to any preceding claim, wherein the representation describing the input image is a text description of the input image.

4. The method according to claim 3, wherein the text description is generated by inputting the input image into an image-to-text model.

5. The method according to any preceding claim, wherein the difference comprises a cosine similarly between the input image embedding and the denoised image embedding.

6. The method according to any preceding claim, wherein the input image embedding and/or denoised image embedding are generated using an image encoder.

7. The method according to any preceding claim, wherein the similarity decision threshold is set based on a mean and standard deviation of a similarity between real images and corresponding denoised real images, the denoised images being denoised by the denoising model.

8. The method according to any preceding claim, wherein the denoising model is trained using only real images.

9. The method according to any preceding claim, wherein the denoising model is a diffusion model.

10. The method according to any preceding claim, wherein upon determining whether the input image is a real image or a computer-generated image, the method further comprises outputting whether the input image is a real image or a computer generated image on an output device, preferably using a graphical user interface.

11. The method according to any preceding claim, wherein a computer generated image is an image generated by an artificial neural network.

12. The method according to any preceding claim, wherein before inputting the representation and the input image into the denoising model the method further comprises:

converting the input image into an input image embedding;
inputting the input image embedding into a pre-trained image autoencoder, wherein training images of the pre-trained image autoencoder are primarily real images;
generating an autoencoder embedding of the input image embedding as an output of the autoencoder;
performing a preliminary determination that the input image is a computer-generated image by comparing a difference between the input image embedding and the autoencoder embedding with an autoencoder decision threshold.

13. The method according to claim 12, wherein the difference between the input image embedding and the autoencoder embedding is determined from a mean squared error loss.

14. A computer program which, when run on a computer, causes the computer to carry out a method comprising:

loading an input image;
inputting the input image and a representation describing the input image into a denoising model for denoising the input image using the representation;
generating a denoised image embedding from the denoised image;
generating an input image embedding from the input image;
comparing a difference between the input image embedding and the denoised image embedding with a similarity decision threshold to determine whether the input image is a real image or a computer generated image.

15. An information processing apparatus for detecting computer generated images comprising a memory and a processor connected to the memory, wherein the processor is configured to:

load an input image;
input the input image and a representation describing the input image into a denoising model for denoising the input image using the representation;
generate a denoised image embedding from the denoised image;
generate an input image embedding from the input image;
compare a difference between the input image embedding and the denoised image embedding with a similarity decision threshold to determine whether the input image is a real image or a computer generated image.

100a

130 — 4. Train a classifier (classes: real, generated)

120 — 3. Perform Feature Extraction

110 — 1. Get Real Image Dataset

115 — 2. Get Generated Image Dataset

Figure 1a

100b

Accuracy on the "Fake" class

**Tested Technology**

| | DDPM | DDIM | GLIDE | LDM | Dalle2 | Midjv2 | RDM | SDv1 | Midjv3 | SDv2 | DiT | Midjv4 | Midjv5 | Firefly |
|---|---|---|---|---|---|---|---|---|---|---|---|---|---|---|
| Firefly | 0 | 0 | 0.03 | 0.3 | 0.07 | 0.12 | 0.15 | 0.1 | 0.41 | 0.37 | 0.49 | 0.27 | 0.35 | 0.99 |
| Midjv5 | 0 | 0 | 0.02 | 0.14 | 0.08 | 0.27 | 0.33 | 0.38 | 0.96 | 0.99 | 0.99 | 0.99 | 0.99 | 1 |
| MidJv4 | 0 | 0 | 0.01 | 0.44 | 0.14 | 0.38 | 0.56 | 0.55 | 1 | 1 | 1 | 1 | 1 | 1 |
| DiT | 0.03 | 0.03 | 0.1 | 0.26 | 0.13 | 0.12 | 0.25 | 0.22 | 0.71 | 0.91 | 1 | 1 | 1 | 1 |
| SDv2 | 0 | 0 | 0.02 | 0.32 | 0.22 | 0.36 | 0.5 | 0.64 | 0.98 | 1 | 1 | 1 | 1 | 1 |
| Midjv3 | 0.02 | 0.06 | 0.22 | 0.82 | 0.76 | 0.86 | 0.89 | 0.89 | 1 | 1 | 1 | 1 | 1 | 1 |
| SDv1 | 0 | 0 | 0.02 | 0.87 | 0.9 | 0.97 | 1 | 1 | 1 | 1 | 1 | 1 | 1 | 1 |
| RDM | 0 | 0.01 | 0.09 | 0.49 | 0.3 | 0.59 | 1 | 1 | 1 | 1 | 1 | 1 | 1 | 1 |
| Midjv2 | 0.02 | 0.05 | 0.3 | 0.83 | 0.8 | 1 | 1 | 1 | 1 | 1 | 1 | 1 | 1 | 1 |
| Dalle2 | 0 | 0.02 | 0.09 | 0.11 | 0.96 | 0.97 | 0.96 | 0.96 | 0.96 | 0.96 | 0.96 | 0.95 | 0.95 | 0.96 |
| LDM | 0.02 | 0.04 | 0.14 | 0.99 | 0.99 | 1 | 1 | 1 | 1 | 1 | 1 | 1 | 1 | 1 |
| GLIDE | 0.1 | 0.15 | 0.98 | 0.99 | 0.98 | 0.99 | 0.99 | 0.99 | 1 | 0.99 | 0.99 | 0.99 | 0.99 | 0.99 |
| DDIM | 0.96 | 0.99 | 0.98 | 0.97 | 0.98 | 0.98 | 0.99 | 0.99 | 0.99 | 0.98 | 0.99 | 0.98 | 0.98 | 0.99 |
| DDPM | 0.96 | 0.99 | 0.98 | 0.97 | 0.98 | 0.98 | 0.99 | 0.99 | 0.99 | 0.98 | 0.99 | 0.98 | 0.98 | 0.99 |

Train set

Figure 1b

Figure 2

300a

S10

Loading an input image

S20

Inputting the input image and a representation describing the input image into a denoising model for denoising the input image using the representation

S30

Generating a denoised image embedding from the denoised image

S40

Generating an input image embedding from the input image

S50

Comparing a difference between the input image embedding and the denoised image embedding with a similarity decision threshold to determine whether the input image is a real image or a computer generated image.

Figure 3a

300b

Input image

Convert into a CLIP embedding

Get text caption of input image from an image-to-text model

Get denoised image by the single denoising process

Get the CLIP embeddings of the denoised images

Compute the CLIP similarity of the original and denoised images

decision based on DST

Decision - Fake

Decision - Real

Threshold Setup

Real images corpus

Get text captions of the images from an image-to-text model

Get the denoised image by the single denoising process

Get the CLIP embeddings of the denoised images

Set the denoising similarity threshold (DST) by the observed CLIP real-denoised pairs similarity

Figure 3b

Figure 4

**Fake Content Detection**

Detected Content

410 — Content type: Text, Image, Voise, Video

415 — Content creation origin: From real, From scratch

420 — Content domain: Photography, Art, Science, Marketing, Security, Medical

Pre-expose to generated content: Yes, No

430 — Pre-expose to real content: Yes, No

435 — Calibration process: Fully Supervised, Training on one class, Set decision threshold

400

625

* A detailed explanation of each category can be found in the appendix at the end of this presentation.

25

Figure 5

Figure 6

Figure 7

Figure 8

800

(a) Surface $logp_\alpha$

(b) Color bumps on $logp_\alpha$

(c) Implicit bumpy $\approx logp_\alpha$

(d) $-D\ (7)$

(e) $ak\ (8)$

(f) $ak - D(15)$

Real

1400

36

Figure 9

1400

Figure 10

1100

1110

Real Images Have
Natural Variability

Real Input

Real Denoised

Lower Similarity

1120

Consistent Generation
Patterns

Generated Input

Generated Denoised

Higher Similarity

Figure 11

1200

Figure 12

Figure 13

Figure 14a

Figure 14b

EP 4 723 052 A1

Figure 15

Input

1510

CLIP Image
Encoder

1520

CLIP
embeddings

1525

Real Images Autoencoder

1530

Reconstruction error
MSE Loss

CLIP
Reconstruction

7150

1550

Decision
Threshold

Real

Fake

1560

1500

1600

PROCESSOR

1603

MEMORY

1604

1602

1605

DISPLAY

1606

INPUT

1607

NETWORK I/F

Figure 16

## EP 4 723 052 A1

Europäisches
Patentamt

European
Patent Office

Office européen
des brevets

# EUROPEAN SEARCH REPORT

**Application Number**

EP 25 17 9646

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Luo Yunpeng ET AL: "LaRE^2: Latent Reconstruction Error Based Method for Diffusion-Generated Image Detection", arXiv.org, 26 March 2024 (2024-03-26), XP093291116, Retrieved from the Internet: URL:https://arxiv.org/pdf/2403.17465v1 [retrieved on 2025-06-30] * the whole document * | 1-11,14, 15 | INV. G06V10/74 |
| X | ZHENDONG WANG ET AL: "DIRE for Diffusion-Generated Image Detection", ARXIV.ORG, CORNELL UNIVERSITY LIBRARY, 201 OLIN LIBRARY CORNELL UNIVERSITY ITHACA, NY 14853, 16 March 2023 (2023-03-16), XP091460810, * the whole document * | 1-11,14, 15 | |
| A | ZEYANG SHA ET AL: "DE-FAKE: Detection and Attribution of Fake Images Generated by Text-to-Image Generation Models", ARXIV.ORG, CORNELL UNIVERSITY LIBRARY, 201 OLIN LIBRARY CORNELL UNIVERSITY ITHACA, NY 14853, 9 January 2023 (2023-01-09), XP091409778, * the whole document * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 13 August 2025 | de Castro Palomares |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **S.-Y. WANG** ; **O. WANG** ; **R. ZHANG** ; **A. OWENS** ; **A. A. EFROS**. Cnn-generated images are surprisingly easy to spot... for now. *Proceedings of the IEEE/CVF conference on computer vision and pattern recognition*, 8695-8704
- **EPSTEIN, D. C.** ; **JAIN, I.** ; **WANG, O.** ; **ZHANG, R.** Online detection of ai-generated images. *Proceedings of the IEEE/CVF International Conference on Computer Vision*, 2023, 382-392
- **RADFORD, A.** ; **KIM, J.W.** ; **HALLACY, C.** ; **RAMESH, A.** ; **GOH, G.** ; **AGARWAL, S.** ; **SASTRY, G.** ; **ASKELL, A.** ; **MISHKIN, P.** ; **CLARK, J.** Learning transferable visual models from natural language supervision. *International conference on machine learning*, July 2021, 8748-8763

- **S.-Y. WANG** ; **O. WANG** ; **R. ZHANG** ; **A. OWENS** ; **A. A. EFROS**. Cnn-generated images are surprisingly easy to spot... for now. *Proceedings of the IEEE/CVF conference on computer vision and pattern recognition*, 2020, 8695-8704
- **F. YU** ; **A. SEFF** ; **Y. ZHANG** ; **S. SONG** ; **T. FUNKHOUSER** ; **J. XIAO**. Lsun: Construction of a large-scale image dataset using deep learning with humans in the loop. *arXiv:1506.03365*, 2015
- **U. OJHA** ; **Y. LI** ; **Y. J. LEE**. Towards universal fake image detectors that generalize across generative models. *Proceedings of the IEEE/CVF Conference on Computer Vision and Pattern Recognition*, 2023, 24480-24489
- **D. COZZOLINO** ; **G. POGGI** ; **R. CORVI** ; **M. NIEβNER** ; **L. VERDOLIVA**. Raising the bar of ai-generated image detection with clip. *Proceedings of the IEEE/CVF Conference on Computer Vision and Pattern Recognition*, 2024, 4356-4366